# EUROPÄISCHE PATENTSCHRIFT

(11) **EP 3 307 613 B1**
(45) Veröffentlichungstag und Bekanntmachung des Hinweises auf die Patenterteilung: **10.07.2019**
(21) Anmeldenummer: 16730763.6
(22) Anmeldetag: 09.06.2016
(51) Int. Cl.: B62K 13/04, B62K 13/06

(54) **UMKONFIGURIERBARES FAHRZEUG**
CONFIGURABLE VEHICLE
VÉHICULE CONVERTIBLE

(30) Priorität: 11.06.2015 DE 102015210728
(43) Veröffentlichungstag der Anmeldung: 18.04.2018
(73) Patentinhaber: GW-Catbikes GmbH, 3427 Utzenstorf (CH)
(72) Erfinder: WEILER, Walter, 35100 Playa-del-Ingles Maspalomas Gran Canaria (ES)
(74) Vertreter: Weickmann & Weickmann PartmbB
(86) Internationale Anmeldenummer: PCT/EP2016/063133
(87) Internationale Veröffentlichungsnummer: WO 2016/198511

(56) Entgegenhaltungen:
- CZ-U1- 20 842
- DE-C- 896 609
- SU-A1- 116 634

## Beschreibung

Die Erfindung betrifft allgemein mehrrädrige Fahrzeuge, die als Freizeit- oder Sportfahrzeuge, Personentransportfahrzeuge oder Lastentransportfahrzeug einsetzbar sind. Die Erfindung betrifft sowohl mit Muskelkraft antreibbare Fahrzeuge als auch motorisch angetriebene oder antreibbare Fahrzeuge. Es wird in diesem Zusammenhang neben verbrennungsmotorisch angetriebenen Fahrzeugen vor allem an elektromotorisch angetriebene Fahrzeuge gedacht.

Es kann sich dabei um eine elektromotorische Hilfskraft oder Zusatzkraft zur von einem Fahrer oder wenigstens einem Fahrzeuginsassen aufgebrachten Muskelkraft handeln. Dabei kann die elektromotorische Antriebsleistung von der muskelkraftbasierten Antriebsleistung abhängen. Dokument DE896609C offenbart: Umkonfigurierbares Fahrzeug, umfassend einen ersten Fahrzeug-Teilrahmen und einen zweiten Fahrzeug-Teilrahmen, die lösbar miteinander gekoppelt oder koppelbar sind, um den Fahrzeugrahmen eines wenigstens ein lenkbares vorderes Laufrad und mehrere hintere Laufräder aufweisenden Fahrzeugs zu bilden; wobei der erste Fahrzeug-Teilrahmen einen Vorderbau mit einer Gabelschaftaufnahme, in der ein Gabelschaft einer das vordere Laufrad mittels einer Laufradachse drehbar lagernden Gabel drehbar gelagert ist, und einen Hinterbau mit einem Fahrersitz oder/und einer Fahrersitzhalterung und einer hinteren Achsaufnahme zur drehbaren Lagerung eines hinteren Laufrads mittels einer Laufradachse aufweist; wobei der zweite Fahrzeug-Teilrahmen im mit dem ersten Fahrzeug-Teilrahmen gekoppelten Zustand sich seitlich zum ersten Fahrzeug-Teilrahmen über diesen hinweg oder diesen hinten passierend erstreckt und eine linke Achsaufnahme aufweist, welche mittels einer Laufradachse ein linkes hinteres Laufrad drehbar lagert, und eine rechte Achsaufnahme aufweist, welche mittels einer Laufradachse ein rechtes hinteres Laufräder drehbar lagert; wobei das Fahrzeug in zumindest zwei der den folgenden drei Konfigurationen verwendbar ist:i) in einer ersten Konfiguration, in der das Fahrzeug ein zweirädriges Fahrzeug (Motorrad ohne Anhänger) ist, welches von dem ersten Fahrzeug-Teilrahmen mit dem vorderen Laufrad und dem mittels der hinteren Achsaufnahme gelagerten hinteren Laufrad ohne den zweiten Fahrzeug-Teilrahmen gebildet ist; und ii) in einer zweiten Konfiguration, in der das Fahrzeug ein vierrädriges Fahrzeug ist, welches von dem ersten Fahrzeug-Teilrahmen mit dem vorderen Laufrad und dem mittels der hinteren Achsaufnahme gelagerten hinteren Laufrad als mittleres hinteres Laufrad und dem mit dem ersten Fahrzeug-Teilrahmen gekoppelten zweiten Fahrzeug-Teilrahmen mit dem linken hinteren Laufrad und dem rechten hinteren Laufrad gebildet ist, derart dass das mittlere hintere Laufrad zwischen dem linken hinteren Laufrad und dem rechten hinteren Laufrad angeordnet ist.

Die Erfindung betrifft ferner zweirädrige Fahrzeuge als auch Fahrzeuge mit mehr als zwei Rädern, wobei vor allem an dreirädrige oder vierrädrige Fahrzeuge gedacht wird. Vor allem wird dabei an Fahrzeuge gedacht, die vorne nur ein lenkbares Rad aufweisen.

Die Erfindung betrifft Fahrzeuge mit nur einem Sitz, nämlich dem Sitz für den Fahrer, sowie auch Fahrzeuge, die neben dem Sitz oder Sitzplatz für den Fahrer wenigsten einen weiteren, vorzugsweise mehrere weitere Sitze oder Sitzplätze für Fahrzeuginsassen oder Beifahrer aufweisen. Sowohl der Sitz für den Fahrer als auch der Sitz bzw. die Sitze der weiteren Insassen/Beifahrer können als Sattel, wie bei einem typischen Fahrrad, ausgeführt sein. Es kommen aber auch andere Ausgestaltungen, wie etwa Sitze mit Rückenlehne, eine Sitzbank und dergleichen, in Betracht. Es wird hierbei speziell auch an Ausgestaltungen ähnlich wie bei sogenannten Rikschas gedacht. In der Tat betrifft die Erfindung Fahrzeuge, die zutreffend als Rikscha zu bezeichnen sind.

Herkömmlich werden Fahrzeuge in unterschiedlichsten Ausgestaltungen mit nur minimaler Konfigurierbarkeit bereitgestellt, entweder als Fahrrad mit zwei Rädern, oder als Fahrrad mit drei Rädern oder als vierrädriges Fahrzeug. Im Zusammenhang mit Fahrrädern und Rikschas sind einerseits Lastenfahrräder und andererseits dem Personentransport dienende Rikschas bekannt, sowie natürlich Freizeit- und Sportzwecke dienende Fahrräder. Im Zusammenhang mit einem Fahrrad ist es bekannt, Anhänger für Lastentransporte zu verwenden, mit einer Anhängerdeichsel, die an einer Anhängerkupplung des Fahrrads angehängt wird. Ein Anwender, der Fahrzeuge für mehrere unterschiedliche Anwendungszwecke benötigt, wird eine entsprechende Mehrzahl von Fahrzeugen, die jeweils für einen bestimmten Zweck ausgelegt sind, anschaffen müssen. Um eine entsprechende Nachfrage bedienen zu können, muss ein Hersteller eine entsprechende Mehrzahl von verschiedenartigen Fahrzeugen in seinem Angebot haben, was für große Hersteller kein Problem ist oder sogar wünschenswert ist, aber für kleinere Hersteller durchaus problematisch sein kann.

Die Erfindung zielt demgegenüber darauf, ein für verschiedene Einsatz- und Anwendungszwecke umkonfigurierbares Fahrzeug bereitzustellen, das unterschiedlichen Anforderungen und Verwendungsszenarien gerecht werden kann.

Erfindungsgemäß wird ein umkonfigurierbares Fahrzeug bereitgestellt, umfassend einen ersten Fahrzeug-Teilrahmen und einen zweiten Fahrzeug-Teilrahmen, die lösbar miteinander gekoppelt oder koppelbar sind, um den Fahrzeugrahmen eines wenigstens ein lenkbares vorderes Laufrad und mehrere hintere Laufräder aufweisenden Fahrzeugs zu bilden, wobei der erste Fahrzeug-Teilrahmen einen Vorderbau mit einer Gabelschaftaufnahme, in der ein Gabelschaft einer das vordere Laufrad mittels einer Laufradachse drehbar lagernden Gabel drehbar gelagert ist, und einen Hinterbau mit einem Fahrersitz oder/und einer Fahrersitzhalterung und einer hinteren Achsaufnahme zur drehbaren Lagerung eines hinteren Laufrads mittels einer Laufradachse aufweist; wobei der zweite Fahrzeug-Teilrahmen im mit dem ersten Fahrzeug-Teilrahmen gekoppelten Zustand sich seitlich zum ersten Fahrzeug-Teilrahmen über diesen hinweg oder diesen hinten passierend erstreckt und eine linke Achsaufnahme aufweist, welche mittels einer Laufradachse ein linkes hinteres Laufrad drehbar lagert, und eine rechte Achsaufnahme aufweist, welche mittels einer Laufradachse ein rechtes hinteres Laufräder drehbar lagert; wobei das Fahrzeug in drei Konfigurationen verwendbar ist: i) in einer ersten Konfiguration, in der das Fahrzeug ein zweirädriges Fahrzeug ist, welches von dem ersten Fahrzeug-Teilrahmen mit dem vorderen Laufrad und dem mittels der hinteren Achsaufnahme gelagerten hinteren Laufrad ohne den zweiten Fahrzeug-Teilrahmen gebildet ist; und ii) in einer zweiten Konfiguration, in der das Fahrzeug ein vierrädriges Fahrzeug ist, welches von dem ersten Fahrzeug-Teilrahmen mit dem vorderen Laufrad und dem mittels der hinteren Achsaufnahme gelagerten hinteren Laufrad als mittleres hinteres Laufrad und dem mit dem ersten Fahrzeug-Teilrahmen gekoppelten zweiten Fahrzeug-Teilrahmen mit dem linken hinteren Laufrad und dem rechten hinteren Laufrad gebildet ist, derart dass das mittlere hintere Laufrad zwischen dem linken hinteren Laufrad und dem rechten hinteren Laufrad angeordnet ist; und iii) in einer dritten Konfiguration, in der das Fahrzeug ein dreirädriges Fahrzeug ist, welches von dem ersten Fahrzeug-Teilrahmen mit dem vorderen Laufrad und dem mit dem ersten Fahrzeug-Teilrahmen gekoppelten zweiten Fahrzeug-Teilrahmen mit dem linken hinteren Laufrad und dem rechten hinteren Laufrad gebildet ist, ohne ein mittels der hinteren Achsaufnahme gelagertes hinteres Laufrad des ersten Fahrzeug-Teilrahmens.

Soweit in dieser Erfindungsbeschreibung von links und rechts, vorne und hinten die Rede ist, wird auf ein dem Fahrer des Fahrzeugs zugeordnetes Koordinatensystem Bezug genommen, der nach vorne sieht, entsprechend der Vorwärts-Fahrrichtung des Fahrzeugs und aus dieser Perspektive die Laufräder als vorderes, hinteres, bzw. linkes hinteres und rechtes hinteres Laufrad identifiziert und entsprechend auch für andere Komponenten diese als seitlich links oder seitlich rechts, vorne oder hinten angeordnet identifiziert.

Betreffend die erfindungsgemäß vorgesehenen drei Konfigurationen wird vor allem an die erste Konfiguration einerseits und die zweite oder dritte Konfiguration andererseits gedacht. Die zweite oder dritte Konfiguration lassen sich alternativ verwenden, so dass das Fahrzeug in allen drei der genannten Konfigurationen verwendbar ist.

Durch Vorsehen des ersten Fahrzeug-Teilrahmens und des zweiten Fahrzeug-Teilrahmens und deren lösbare Verkoppelbarkeit kann das Fahrzeug in einem über herkömmliche Umkonfigurierbarkeiten erheblich hinausgehendem Ausmaß umkonfiguriert werden, nämlich sogar hinsichtlich der Anzahl von Laufrädern und damit in einer Weise, dass je nach Konfiguration in einer herkömmlichen Sichtweise völlig unterschiedliche Fahrzeugtypen realisiert sind. So kann das Fahrzeug in einer ersten Konfiguration als Fahrrad, gegebenenfalls Fahrrad mit Elektroantrieb wie eine sogenanntes PEDELEC vorliegen und in der zweiten oder/und dritten Konfiguration als Fahrzeug, welches als Rikscha zu identifizieren ist oder einer Rikscha zumindest nahe kommt, gegebenenfalls ebenfalls mit elektromotorischem Antrieb.

Erfindungsgemäss ist der erste Fahrzeug-Teilrahmen mit einer Hinterbaufederung ausgeführt. Hierzu wird weiter vorgeschlagen, dass die Hinterbaufederung eine die hintere Achsaufnahme aufweisende, relativ zu einem den Fahrersitz oder bzw. die Fahrersitzhalterung aufweisenden Abschnitt des ersten Fahrzeug-Teilrahmens schwenkbare Schwinge und wenigstens eine die Schwinge relativ zu dem den Fahrersitz oder bzw. die Fahrersitzhalterung aufweisenden Abschnitt des ersten Fahrzeug-Teilrahmens federnd abstützende Federeinheit oder Feder- und Dämpfereinheit aufweist. Es wird eine entsprechend hoher Fahrkomfort erreicht und für die zweite Konfiguration eine Anpassbarkeit an einen gegebenenfalls unebenen Untergrund, so dass alle drei hinteren Laufräder trotz Unebenheiten Untergrundkontakt haben und gegebenenfalls Antriebs- oder Bremsmomente am Untergrund abstützen können.

Für die zweite Konfiguration wird vorgeschlagen, dass das mittlere hintere Laufrad gegenüber dem linken hinteren Laufrad und dem rechten hinteren Laufrad nach hinten versetzt ist. Dies ist aber nicht zwingend. Man kann auch vorsehen, dass das mittlere hintere Laufrad auf gleicher Höhe in Längsrichtung des Fahrzeugs wie das linke und das rechte hintere Laufrad angeordnet ist oder gegenüber diesen nach vorne versetzt ist.

Die Schwinge kann erfindungsgemäss am ersten Fahrzeug-Teilrahmen lösbar befestigt sein und für die Realisierung der dritten Konfiguration vom ersten Fahrzeug-Teilrahmen entfernbar sein, vorzugsweise zusammen mit der Federeinheit oder Feder- und Dämpfereinheit. Die zweite und die dritte Konfiguration unterscheiden sich dann dadurch, ob die Schwinge mit dem mittleren hinteren Laufrad vorhanden ist oder entfernt wurde.

Bevorzugte Ausführungsformen zeichnen sich dadurch aus, dass zumindest das mittels der hinteren Achsaufnahme des ersten Fahrzeug-Teilrahmens gelagerte hintere Laufrad ein motorisch, vorzugsweise elektromotorisch, oder/und mit Muskelkraft durch wenigstens einen Fahrer oder Insassen des Fahrzeugs antreibbares Antriebs-Laufrad ist.

Bevorzugte Ausführungsformen zeichnen sich ferner oder alternativ dadurch aus, dass das linke hintere Laufrad und das rechte hintere Laufrad jeweils ein motorisch, vorzugsweise elektromotorisch antreibbares Antriebs-Laufrad ist oder/und dass das vordere Laufrad ein motorisch, vorzugsweise elektromotorisch antreibbares Antriebs-Laufrad ist.

Es wird daran gedacht, dass das Fahrzeug sich durch wenigstens eines, vorzugsweise mehrere der folgenden Merkmale auszeichnet:
- die Fahrersitzhalterung ist als Sattelstützenhalterung zur Halterung einer Sattelstütze ausgeführt;
- die Gabel ist als Federgabel ausgeführt;
- zumindest das mittels der hinteren Achsaufnahme des ersten Fahrzeug-Teilrahmens gelagerte hintere Laufrad ist mit Muskelkraft durch das Treten von Pedalen antreibbar;
- das Fahrzeug ist vermittels wenigstens einer Antriebsdrehmoment zu dem mittels der hinteren Achsaufnahme des ersten Fahrzeug-Teilrahmens gelagerten hinteren Laufrad übertragenden Antriebskette antreibbar;
- das Antriebsmoment ist vermittels eines Fahrzeuggetriebes in wählbaren Gängen mit unterschiedlichen Übersetzungen oder Untersetzungen zu dem mittels der hinteren Achsaufnahme des ersten Fahrzeug-Teilrahmens gelagerten hinteren Laufrad übertragbar;
- das Fahrzeuggetriebe weist eine Kettenschaltungsanordnung auf;
- die Kettenschaltungsanordnung weist eine durch Pedalieren antreibbaren vorderen Kettenblättern zugeordnete vordere Kettenschaltung auf;
- das Fahrzeug ist mit wenigstens einem Motor oder Hilfsmotor in Form eines Brennkraftmotors oder - vorzugsweise - Elektromotors ausgeführt, von dem ein Antriebsdrehmoment auf das mittels der hinteren Achsaufnahme des ersten Fahrzeug-Teilrahmens gelagerte hintere Laufrad oder/und auf das linke und das rechte hintere Laufrad oder/und auf das vordere Laufrad übertragbar ist;
- das mittels der hinteren Achsaufnahme des ersten Fahrzeug-Teilrahmens gelagerte hintere Laufrad ist mit einem Motor bzw. Hilfsmotor in Form eines Nabenmotors ausgeführt;
- das vordere Laufrad ist mit einem Motor bzw. Hilfsmotor in Form eines Nabenmotors ausgeführt;
- das linke hintere Laufrad und das rechte hintere Laufrad sind jeweils mit einem Motor bzw. Hilfsmotor in Form eines Nabenmotors ausgeführt.

Es wird vor allem daran gedacht, dass das Fahrzeug in der ersten Konfiguration ein Fahrrad oder ein Elektro-Fahrrad (etwa ein sogenanntes PEDELEC) oder ein Mofa, Moped, Kleinkraftrad oder Motorrad ist, in üblicher Bauform oder - falls gewünscht - Chopper- oder Cruiser-Bauform. Betreffend ein sogenanntes PEDELEC wird sowohl an ein ohne Führerschein führbares PEDELEC als auch an ein nur mit Führerschein führbares PEDELEC (sogenanntes PEDELEC-S) gedacht. Im Falle eines Kleinkraftfahrzeugs oder Motorrads können anstelle einer Pedalanordnung eines Fahrrads oder Mofas Fußstützen in der an sich bekannten Art vorgesehen sein.

Soweit im Falle der zweiten Konfiguration oder/und dritten Konfiguration ein motorischer Antrieb über wenigstens ein hinteres Laufrad vorgesehen ist, kann im Falle eines solchen Antriebs über mehrere der hinteren Laufräder eine elektronische Differentialfunktion über entsprechende Ansteuerung der einem jeweiligen hinteren Laufrad zugeordneten Motoren, beispielsweise Nabenmotoren, realisiert sein. Im Falle der zweiten Konfiguration kann man einen Antrieb alleine über das mittlere hintere Laufrad vorsehen, wodurch eine Differentialfunktion entbehrlich wird. Gleiches gilt für einen Antrieb über das vordere Laufrad. Es kommt auch ein Allrad-Antrieb in Betracht, also ein Ausführung aller Laufräder als angetriebene Laufräder in Betracht, sowohl in der zweiten Konfiguration, als auch in der dritten Konfiguration, sowie auch in der ersten Konfiguration, was sich durch die angesprochenen Nabenmotoren, vorzugsweise elektrische Nabenmotoren, einfach realisieren lässt.

Bevorzugt ist vorgesehen, dass das Fahrzeug in der zweiten Konfiguration oder/und in der dritten Konfiguration wenigstens eine zumindest durch den zweiten Fahrzeug-Teilrahmen gebildete oder gehaltene Lastaufnahme aufweist oder dass das Fahrzeug dafür konfigurierbar ist, dass in der zweiten Konfiguration oder/und in der dritten Konfiguration wenigstens eine solche Lastaufnahme bereitgestellt ist, beispielsweise eine linke Lastaufnahme auf einer linken Seite des ersten Fahrzeug-Teilrahmens und eine rechte Lastaufnahme auf einer rechten Seite des ersten Fahrzeug-Teilrahmens oder eine sich seitlich zum ersten Fahrzeug-Teilrahmen über diesen hinweg oder diesen hinten passierend erstreckende Lastaufnahme.

Ferner wird alternativ oder zusätzlich vorgeschlagen, dass das Fahrzeug in der zweiten Konfiguration oder/und in der dritten Konfiguration gegenüber der ersten Konfiguration wenigstens zwei zusätzliche, zumindest durch den zweiten Fahrzeug-Teilrahmen abgestützte Personensitzplätze bereitstellt oder dass das Fahrzeug dafür konfigurierbar ist, dass in der zweiten Konfiguration oder/und in der dritten Konfiguration wenigstens zwei solche zusätzlichen Personensitzplätze bereitgestellt sind, beispielsweise wenigstens ein linker Personensitz auf einer linken Seite des ersten Fahrzeug-Teilrahmens und wenigstens ein rechter Personensitz auf einer rechten Seite des ersten Fahrzeug-Teilrahmens oder eine sich seitlich zum ersten Fahrzeug-Teilrahmen über diesen hinweg oder diesen hinten passierend erstreckende, mehrere Personensitzplätze bereitstellende Sitzbank.

Eine bevorzugte Ausgestaltung zeichnet sich dadurch aus, dass der zweite Fahrzeug-Teilrahmen eine in der zweiten Konfiguration oder/und in der dritten Konfiguration links des ersten Fahrzeug-Teilrahmens angeordnete linke Sitz- oder Last-Halterung und eine in der zweiten Konfiguration oder/und in der dritten Konfiguration rechts des ersten Fahrzeug-Teilrahmens angeordnete rechte Sitz- oder Lasthalterung aufweist, die vorzugsweise als Sattelstützenhalterungen ausgeführt sind.

Eine vorteilhafte Ausgestaltung des zweiten Fahrzeug-Teilrahmens zeichnet sich dadurch aus, dass dieser eine Stützenanordnung aufweist, die in der zweiten Konfiguration oder/und in der dritten Konfiguration als den Personensitzplätzen des zweiten Fahrzeug-Teilrahmens zugeordnete Fußstützenanordnung dient oder/und im unbenutzten Zustand entsprechend der ersten Konfiguration als Rahmenstützenanordnung zum Abstützen auf einem Untergrund und damit zum definierten Abstellen des zweiten Fahrzeug-Teilrahmens auf dem Untergrund dient.

Nicht beansprucht ist, dass die Stützenanordnung wenigstens eine linke Stütze und wenigstens eine rechte Stütze umfasst, die als jeweils wenigstens einem Personensitzplatz des zweiten Fahrzeug-Teilrahmens zugeordnete Fußstütze für den auf diesem sitzenden Insassen dienen oder/und im unbenutzten Zustand entsprechend der ersten Konfiguration als Rahmenstützen zum Abstützen auf einem Untergrund und damit zum definierten Abstellen des zweiten Fahrzeug-Teilrahmens auf dem Untergrund dienen.

Für eine sichere und gute Fahreigenschaften des Fahrzeugs ermöglichende Verkoppelbarkeit der beiden Fahrzeug-Teilrahmen wird vorgeschlagen, dass der Hinterbau des ersten Fahrzeug-Teilrahmens eine zur Abstützung von Kippkräften in einer seitlichen Querrichtung zum ersten Fahrzeug-Teilrahmenrahmen und zur Abstützung von Kippkräften in einer zur seitlichen Querrichtung orthogonalen Hochrichtung des ersten Fahrzeug-Teilrahmenrahmens geeignete Koppeleinrichtung aufweist, die mit einer ebenfalls zur Abstützung von Kippkräften in dieser seitlichen Querrichtung und in dieser Hochrichtung geeignete Gegen-Koppeleinrichtung des zweiten Fahrzeug-Teilrahmens gekoppelt oder koppelbar ist, vorzugsweise formschlüssig gekoppelt oder koppelbar ist. Dabei kann man vorteilhaft vorsehen, dass die Koppeleinrichtung einen ersten Koppelrahmen aufweist, welcher mit einem zweiten Koppelrahmen der Gegen-Koppeleinrichtung gekoppelt oder koppelbar ist, vorzugsweise formschlüssig gekoppelt oder koppelbar ist, wobei die Koppelrahmen vorzugsweise als Winkelrahmen ausgeführt sind. Ist die Federeinheit oder Feder- und Dämpfereinheit bzw. ein Antrieb über eine wenigstens ein hinteres Laufrad antreibende Antriebskette vorgesehen, so ist es für eine gute Raumausnutzung vorteilhaft, wenn sich die Federeinheit oder Feder- und Dämpfereinheit oder/und die Antriebskette zumindest in der ersten Konfiguration durch einen von Koppelrahmenabschnitten des ersten Koppelrahmens umgebenen Innenbereich des Koppelrahmens erstreckt, sowie, zumindest in der zweiten Konfiguration des Fahrzeugs, durch einen von Koppelrahmenabschnitten des zweiten Koppelrahmens umgebenen Innenbereich des zweiten Koppelrahmens erstreckt, wobei der zweite Koppelrahmen mit einer Koppelrahmenlücke ausgeführt ist, durch welche die Federeinheit oder Feder- und Dämpfereinheit oder/und die Antriebskette im Zuge des Koppelns des zweiten Fahrzeug-Teilrahmens mit dem ersten Fahrzeug-Teilrahmen in den Innenbereich des zweiten Koppelrahmens einführbar ist. Zweckmäßig kann man vorsehen, dass die Koppelrahmen mit Passlöchern und in ein jeweiliges Passloch eingreifenden, an einem jeweiligen Koppelrahmen fest verbundenen Passbolzen oder/und mit Passlöchern zur Aufnahme ein jeweiliges Passloch beider Koppelrahmen durchsetzender, gegenüber den Koppelrahmen gesonderter Passbolzen ausgeführt sind, zum zum formschlüssigen Koppeln und relativen Zentrieren der Koppelrahmen mittels der Passbolzen und Passlöcher. Alternativ oder zusätzlich kann man weiterhin zweckmäßig vorsehen, dass die Koppelrahmen mit Löchern und in ein jeweiliges Loch eingreifenden, an einem jeweiligen Koppelrahmen fest verbundenen Schraubbolzen oder/und mit Löchern zur Aufnahme ein jeweiliges Loch beider Koppelrahmen durchsetzender, gegenüber den Koppelrahmen gesonderter Schraubbolzen ausgeführt sind, zum formschlüssigen Koppeln und Verbinden der Koppelrahmen mittels der Schraubbolzen und zugehöriger Schraubmuttern.

In einer nicht beanspruchten Ausführungsform, ist jeweilige Koppelrahmen bevorzugt aus Metallmaterial hergestellt. Es wird vor allem an Rohrmaterial, insbesondere Vierkantrohrmaterial, aus Metall gedacht.

Um das Fahrzeug für zusätzliche Verwendungsmöglichkeiten tauglich zu machen, wird vorgeschlagen, dass der erste Fahrzeug-Teilrahmen oder/und der zweite Fahrzeug-Teilrahmen mit wenigstens einer Anhänger-Kupplungseinrichtung ausgestattet ist. Man kann das Fahrzeug somit mit einem oder mehreren Anhängern verwenden, beispielsweise für Lasttransporte.

Speziell wird daran gedacht, dass der zweite Fahrzeug-Teilrahmen eine linke Anhänger-Kupplungseinrichtung oder/und eine rechte Anhänger-Kupplungseinrichtung aufweist, die vorzugsweise von einem jeweiligen Halterungselement gehalten ist/sind, welches integraler Bestandteil des zweite Fahrzeug-Teilrahmens ist oder an diesem befestigt, gewünschtenfalls an diesem lösbar befestigt ist. Dabei kann man vorsehen, dass das Halterungselement einen linken und einen rechten Schenkel aufweist, zwischen denen das linke bzw. rechte hintere Laufrad angeordnet ist, sowie einen den linken und den rechten Schenkel verbindenden, hinter dem betreffenden Laufrad angeordneten Verbindungsbereich, der die betreffende Anhänger-Kupplungseinrichtung aufweist.

Der erste Fahrzeug-Teilrahmen umfasst einen Vorderbau mit einer Gabelschaftaufnahme, in der ein Gabelschaft einer ein vorderes Laufrad mittels einer Laufradachse drehbar lagernden Gabel drehbar gelagert ist, und einen Hinterbau mit einem Fahrersitz oder/und einer Fahrersitzhalterung und einer hinteren Achsaufnahme zur drehbaren Lagerung eines hinteren Laufrads mittels einer Laufradachse, und ist mit einem erfindungsgemäßen zweiten Fahrzeug-Teilrahmen koppelbar.

Der zweite Fahrzeug-Teilrahmen erstreckt sich im mit einem erfindungsgemäßen ersten Fahrzeug-Teilrahmen gekoppelten Zustand seitlich zum ersten Fahrzeug-Teilrahmen über diesen hinweg oder diesen hinten passierend und weist eine linke Achsenaufnahme auf, welche mittels einer Laufradachse ein linkes hinteres Laufrad drehbar lagert und weist ein rechte Achsaufnahme auf, welche mittels einer Laufradachse ein rechtes hinteres Laufrad drehbar lagert.

Die beiden nicht erfindungsgemäßen Fahrzeug-Teilrahmen weisen vorzugsweise weitere Merkmale des ersten bzw. zweiten Fahrzeug-Teilrahmens gemäß der vorangehenden Beschreibung des erfindungsgemäßen umkonfigurierbaren Fahrzeugs und dessen vorgeschlagenen Weiterbildungen auf.

Gemäß einer besonders bevorzugten Ausführungsform ist der erfindungsgemäße erste Fahrzeug-Teilrahmen bzw. der erste Fahrzeug-Teilrahmen des erfindungsgemäßen umkonfigurierbaren Fahrzeugs mit einem Zentraldämpfungssystem auf Basis einer das hintere Laufrad drehbar lagernden Schwinge und mit einer die Kopplung mit dem zweiten Fahrzeug-Teilrahmen ermöglichenden Andock-Konstruktion ausgeführt, für eine einfache Erweiterung zu einem mehr als zwei Räder aufweisenden Fahrzeug, beispielsweise nutzbar für drei Personen oder alternativ als Lastentransportfahrzeug. Neben dieser Verwendung in der erfindungsgemäß ermöglichten zweiten Konfiguration oder dritten Konfiguration kann der erste Fahrzeug-Teilrahmen als Rahmen eines normalen Fahrrads insbesondere mit einer Gangschaltung sowie als sogenanntes E-Bike beispielsweise mit einer elektromotorischen Leistung von 250 Watt eingesetzt werden. Dieses Fahrrad kann zwei Sitzplätze bieten, einen für den Fahrer und einen für einen Beifahrer, wofür ein entsprechende Sitzbankkonstruktion oder alternativ einzelne Sattel oder Sitze vorgesehen sein können.

Sowohl der Sitzplatz bzw. die Sitzplätze des ersten Fahrzeug-Teilrahmens als auch die Sitzplätze des zweiten Teil-Rahmens können für Fahrer bzw. Beifahrer (allgemein Insassen) mit üblichen Körpergrößen ausgelegt sein, beispielsweise für Körpergrößen im Bereich von etwa 150 cm bis 190 cm. Prototypen einer besonderen bevorzugten Ausführungsform wurden getestet mit zwei Personen sitzend auf Sitzplätzen des ersten Fahrzeug-Teilrahmens sowie mit drei Personen sitzend auf einem Sitzplatz des ersten Fahrzeug-Teilrahmens und auf zwei Sitzplätzen des angekoppelten zweiten Fahrzeug-Teilrahmens, sowie als Lastentransportfahrzeug mit 250 Kilogramm-Zuladung, und zwar als elektromotorisches Fahrzeug mit einer elektromotorischen Leistung von 1 kW sowie mit einer elektromotorischen Leistung von 2 kW. Bei diesem Prototyp mit in der zweiten Konfiguration gegenüber dem linken und dem rechten hinteren Laufrad nach hinten versetzten mittleren Laufrad erfolgte der Antrieb über dieses mittlere hintere Laufrad, ohne Erfordernis für ein Differential. Es zeigt sich ein hervorragender Fahrkomfort. Ein Versatz des mittleren hinteren Laufrads von beispielsweise 10 und 15 cm nach hinten gegenüber dem linken hinteren Laufrad und dem rechten hinteren Laufrad erscheint vorteilhaft, vor allem in Kombination mit dem bevorzugten zentralen Dämpfungssystem, beispielsweise in Form einer gasdruckgedämpften Federung. Vorteilhaft werden unebene Straßen oder Wege sowie auch Bordsteinkanten gut ausgeglichen. Für ein E-Bike bzw. E-Fahrzeug wird eine elektromotorische Leistung von 1 kW für die Konfiguration als E-Bike und eine elektromotorische Leistung von 2 kW für die Konfiguration als E-Fahrzeug für mindestens drei Personen oder als Lastenfahrzeug ohne Beschränkung der Allgemeinheit als besonders gut geeignet angesehen. Es kommen aber auch höhere elektrische Leistungen in Betracht, bis hin zu beispielsweise 11 kW.

Im Folgenden werden bevorzugte Ausführungsformen des ersten Fahrzeug-Teilrahmens und des zweiten Fahrzeug-Teilrahmens und damit des erfindungsgemäßen umkonfigurierbaren Fahrzeugs in verschiedenen Konfigurationen erläutert, mit Bezugnahme auf die beigefügten Figuren.
- Figur 1: zeigt das Fahrzeug in einer ersten Konfiguration, in der es als Fahrrad konfiguriert ist, welches von einem ersten Fahrzeug-Teilrahmen mit zugehörigen Komponenten gebildet ist.
- Figur 2: zeigt einen zweiten Fahrzeug-Teilrahmen mit zugehörigen Komponenten in einem abgestellten Zustand.

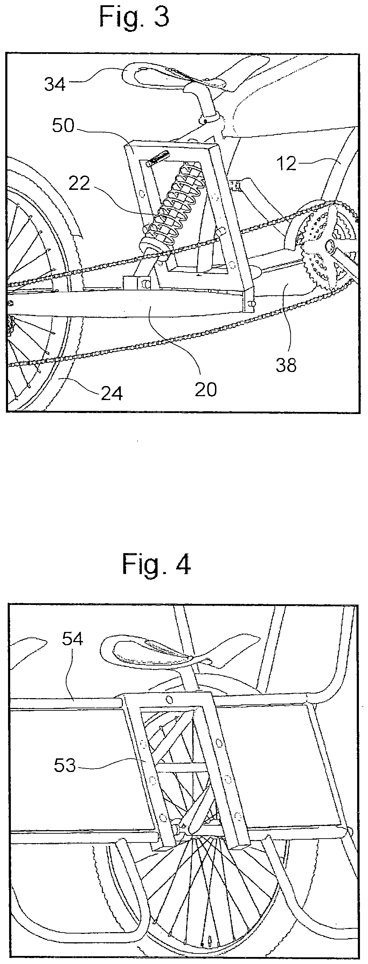

- Figur 3: zeigt Einzelheiten des ersten Fahrzeug-Teilrahmens.
- Figur 4: zeigt Einzelheiten des zweiten Fahrzeug-Teilrahmens.
- Figur 5: zeigt Details des ersten und des zweiten Fahrzeug-Teilrahmens in einem Zustand vor dem Koppeln der Teilrahmen miteinander bzw. nach dem Entkoppeln der Teilrahmen voneinander.
- Figur 6: zeigt das Fahrzeug in einer zweiten Konfiguration, bei dem der zweite Fahrzeug-Teilrahmen an dem ersten Fahrzeug-Teilrahmen angekoppelt ist und zwei zusätzliche, sattelartige Sitzplätze für Beifahrer bereitstellt.
- Figur 7: zeigt das Fahrzeug der Figur 6 konfiguriert als Lastenfahrzeug, mit einer anstelle der zusätzlichen Sitzplätze vorgesehenen Lastenaufnahme.
- Figur 8: zeigt das Fahrzeug der Figur 6 in einer seitlichen Ansicht.
- Figur 9: zeigt das Fahrzeug der Figur 6 in einer Ansicht von vorne.
- Figur 10: zeigt das Fahrzeug der Figur 6 in einer Ansicht schräg von oben hinten, ohne durch sattelstützenartige Aufnahmen gehaltene Sitzplätze.
- Figur 11: zeigt eine am Fahrzeug der Figur 10 integrierte Anhängerkupplungseinrichtung als gesonderte, nachrüstbare Einrichtung.

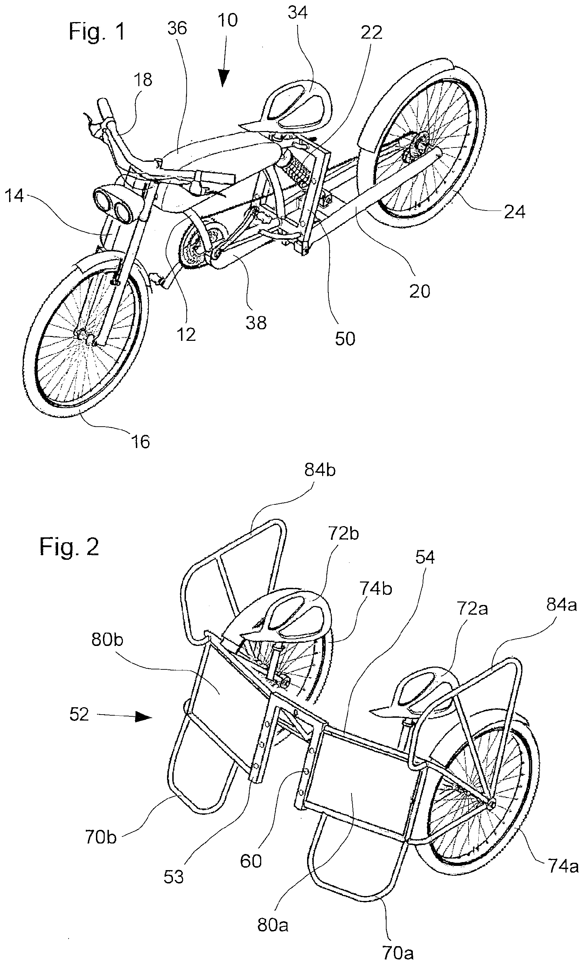

Figur 1 zeigt ein Fahrrad, welches alternativ auch als Elektro-Fahrrad, insbesondere sogenanntes PEDELEC, ausgeführt sein könnte und in der Figur mit 10 bezeichnet ist. Das Fahrrad weist einen Fahrradrahmen 12 auf, welcher im Folgenden auch als erster Fahrzeug-Teilrahmen bezeichnet wird. In an sich bekannter Art und Weise ist eine mit einem Lenker 18 versehene Gabel 14 mittels einer Gabelschaftaufnahme am Rahmen gelagert, die mittels einer Achse ein vorderes Laufrad 16 drehbar lagert und mittels des Lenkers zum Lenken des Fahrzeugs dient. Bevorzugt ist die Gabel 14 als Federgabel ausgeführt.

Der Fahrradrahmen 12 ist mit einer Hinterbaufederung ausgeführt, umfassend eine Schwinge 20 mit einer Feder- und Stossdämpfereinheit 22, bevorzugt mit variabler Dämpfung. Die Schwinge lagert auf an sich bekannte Art und Weise mittels einer Achse ein hinteres Laufrad 24, welches über eine Antriebskette mit einer Fahrradkettenschaltung und eine vordere Pedalanordnung durch Muskelkraft des Radfahrers antreibbar ist. Die Kettenschaltung weist mehrere vordere Kettenblätter und mehrere hintere Antriebsritzel auf, und die Antriebskette ist durch einen jeweiligen vorderen bzw. hinteren Umwerfer zu einem jeweiligen momentan wirksamen Kettenblatt bzw. Antriebsritzel auf an sich bekannte Art und Weise überführbar.

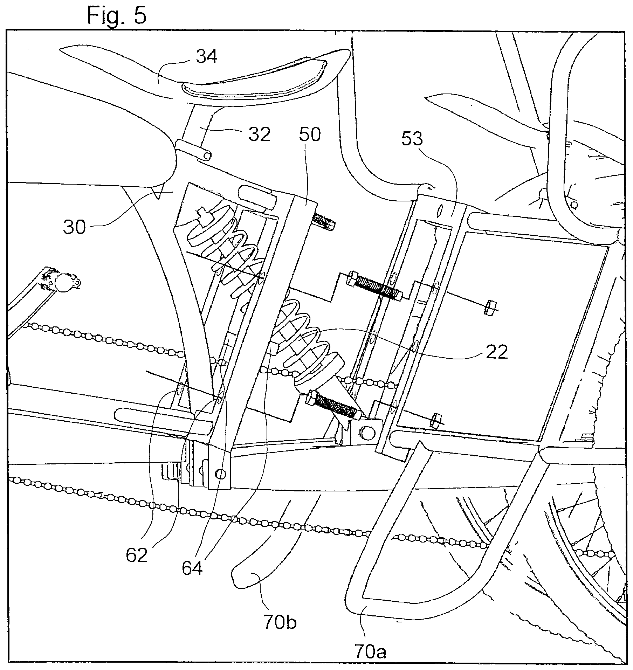

Der Fahrzeugrahmen weist eine in Figur 5 erkennbare Sattelstützenhalterung 30 auf, die die Sattelstütze 32 eines Fahrradsattels 34 hält. Anstelle eines Sattels könnte auch eine Sitzbank vorgesehen sein, die Platz für zwei Personen, nämlich den Radfahrer und einen Sozius oder Beifahrer, bieten könnte.

Ein vor dem Sattel vorgesehenes tankartiges Gebilde 36 kann zur Unterbringung von Utensilien ausgeführt sein oder, im Falle einer Ausführung des Fahrrads als Elektro-Fahrrad, zur Unterbringung einer Batterieanordnung zur elektrischen Energieversorgung mindestens eines elektrischen Antriebmotors, beispielsweise eines Nabenmotors des hinteren Laufrads 24 oder/und eines Nabenmotors des vorderen Laufrads 16. Das tankartige Gebilde 36 kann aus Kunststoff oder Karbon oder Leichtmetall hergestellt sein. Im Falle einer Ausführung eines Fahrrads als Elektro-Fahrrad kann ein weiteres Aufnahmegehäuse 38 für den Elektrobetrieb notwendigen Komponenten wie Controller und Elektronik aufnehmen, soweit diese nicht im tankartigen Gebilde 36 untergebracht sind. Auch dieses unten am Fahrradrahmen angebrachte Gehäuse kann aus Kunststoff, Karbon oder Leichtmetall hergestellt sein. Betreffend die Ausführung des Fahrzeugs als Elektro-Fahrrad, wird vor allem an einen elektromotorischen Antrieb des hinteren Laufrads 24 gedacht, mit einer elektrischen Antriebsleistung von bis zu 2 kW, bevorzugt realisiert durch einen Nabenmotor wie angesprochen. Es kommt ohne weiteres aber auch in Betracht, einen Elektromotor in den Fahrradrahmen zu integrieren, etwa im Bereich der Pedalanordnung für einen elektromotorischen Antrieb des hinteren Laufrads über die Antriebskette, oder auf andere Weise. Bei einem Elektro-Fahrrad ist es bevorzugt, dass der Antrieb sowohl auf Basis von Muskelkraft sowie auf Basis von elektromotorischer Kraft erfolgt, wobei die elektromotorische Leistung von der Antriebsleistung durch die Muskelkraft abhängen kann.

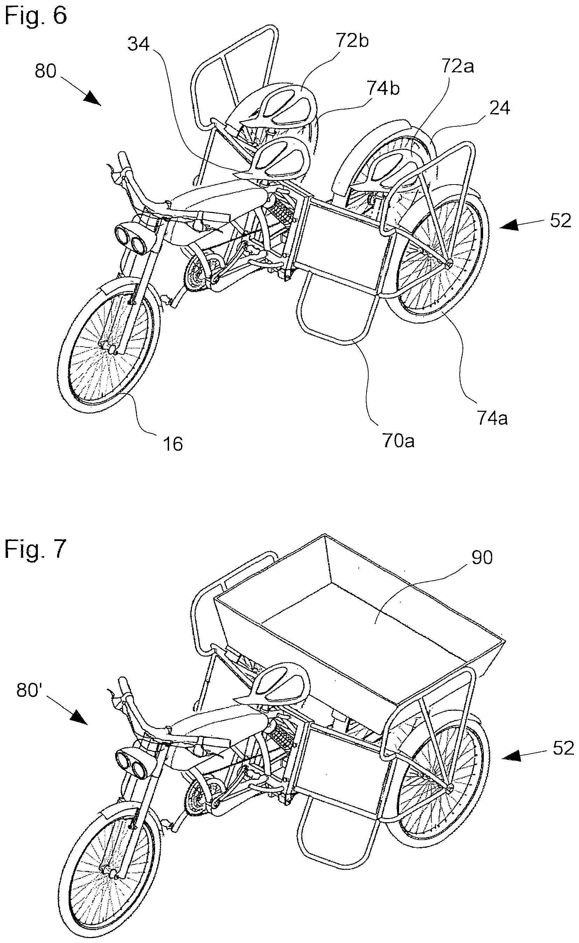

Der erste Fahrzeug-Teilrahmen 12 ist mit einem Koppelrahmen 50 ausgeführt, um einen zwei Laufräder aufweisenden Hinterwagen 52 ankoppeln zu können, der in Figur 2 dargestellt ist. Der Hinterwagen 52 weist einen Hinterwagenrahmen 54 auf, der im Folgenden als zweiter Fahrzeug-Teilrahmen angesprochen ist und in einem zentralen Bereich einen Koppelrahmen 53 aufweist, der mit dem Koppelrahmen 50 des Fahrradrahmens bzw. ersten Fahrzeug-Teilrahmens koppelbar ist, mittels Passstiften, Passlöchern und Schraubbolzen, wie in Figur 5 zu sehen. Der Koppelrahmen (erster Koppelrahmen) 50 des ersten Fahrzeug-Teilrahmens 12 ist als rechteckiger Winkelrahmen ausgeführt, wohingegen der Koppelrahmen (zweiter Koppelrahmen) 53 des zweiten Fahrzeug-Teilrahmens 54 als U-förmiger Winkelrahmen ausgeführt ist, so dass die Feder- und Stossdämpfereinheit 22 sich im gekoppelten Zustand gemäß den Figuren 6 bis 10 durch einen von Winkelschenkeln des jeweiligen Koppelrahmens umgebenden Innenraum der Koppelrahmen erstrecken kann. Die Koppelrahmen können vorteilhaft als Vierkantrohrrahmen ausgeführt sein.

Ausweislich Figur 2 und Figur 5 kann der zweite Koppelrahmen 53 sieben Passlöcher 60 aufweisen, in die Pass- und Schraubbolzen des ersten Koppelrahmens 50 bzw. gesonderte, Passlöcher des ersten Koppelrahmens und des zweiten Koppelrahmens durchgreifende Schraubbolzen eingreifen, um die beiden Koppelrahmen relativ zueinander zu zentrieren und durch die Schraubbolzen mit zugeordneten Muttern fest miteinander zu verbinden. Entsprechende Passlöcher des ersten Koppelrahmens 50 sind in Figur 5 mit 62 bezeichnet und zwei fest dem ersten Koppelrahmen 50 zugehörige Passstifte sind in Figur 5 mit 64 bezeichnet. Die Figur veranschaulicht auch das Verschrauben der beiden Koppelrahmen miteinander durch gesonderte oder integrale Schraubbolzen und zugehörige Muttern.

Der zweite Fahrzeug-Teilrahmen 54 ist mit nach unten vorstehenden Rahmenbügeln 70a und 70b ausgeführt, die den Hinterwagen 52 im unbenutzten, abgestellten Zustand gemäß Figur 2 als Bodenstützen dienen, damit der Hinterwagen auf definierte Weise auf dem Boden stehen kann. Der Hinterwagen 52 ist dann etwas nach vorne gekippt, bis die Unterseiten der Rahmenbügel 70a und 70b auf dem Boden aufstehen.

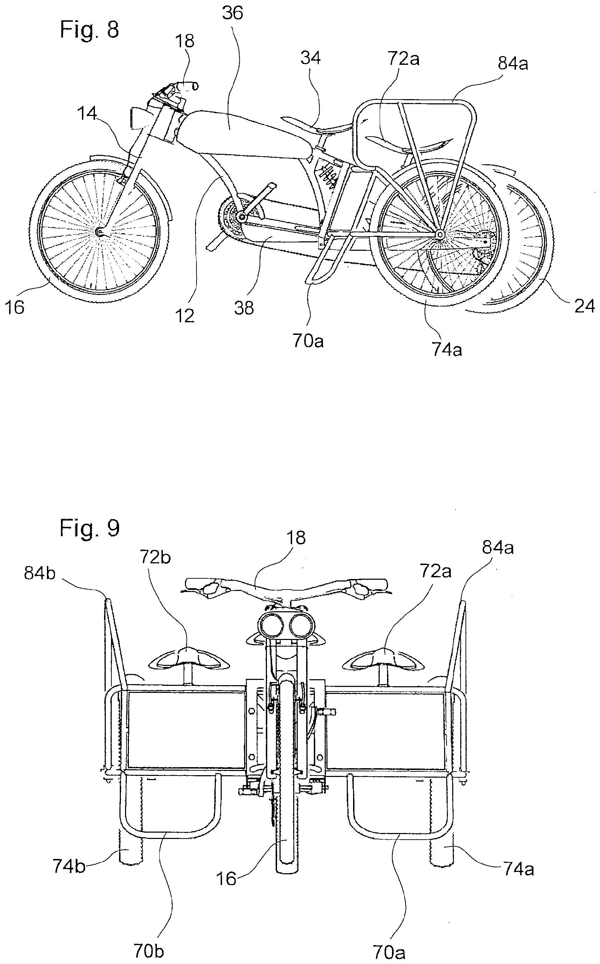

Wird der Hinterwagen 52 bzw. dessen zweiter Fahrzeug-Teilrahmen 54 mit dem Fahrrad 10 bzw. dessen ersten Fahrzeug-Teilrahmen 12 des ersten Fahrrads vermittels der Koppelrahmen gekoppelt, so wird der Hinterwagen 52 auf seiner Vorderseite etwas angehoben, so dass die Rahmenbügel vom Boden abheben und hinreichenden Abstand vom Boden haben, wie es für das Fahren des Fahrzeugs über auch unebenen Untergrund erforderlich ist. Die Rahmenbügel 70a und 70b dienen dann als Fußstützen für die Beifahrer, die auf einem linken Sitz 72a und einem rechten Sitz 72b des Hinterwagens 52 Platz nehmen können. Figur 6 zeigt das durch Ankoppeln des Hinterwagens 52 am Fahrrad 10 entstandene vierrädrige Fahrzeug 80 mit drei Sitzplätzen für den Fahrer auf dem Sattel 34 und für zwei Beifahrer auf dem linken und rechten hinteren Sattel 72a und 72b. Anstelle solcher Sättel können auch sesselartige Sitzplätze vorgesehen sein, oder man könnte eine Sitzbank vorsehen. Das in Figur 6 gezeigte resultierende Fahrzeug 80 ist ein vierrädriges Fahrzeug, welches das vordere Laufrad 16 und das durch Muskelkraft angetriebene hintere Laufrad 24 aufweist, sowie ein linkes hinteres Laufrad 74a und ein rechtes hinteres Laufrad 74b des Hinterwagens 52, die, wie in Figur 8 zu erkennen, etwas weiter vorne als das mittlere hintere Laufrad 24 angeordnet sind.

Gemäß einer in den Figuren nicht gezeigten Abwandlung ist die Schwinge 20 samt der Feder- und Dämpfereinheit 22 lösbar am ersten Fahrzeug-Teilrahmen 12 montiert, beispielsweise mittels Verschlußelementen ähnlich wie Schnellspanner, so dass die Schwinge 20 mitsamt der Feder- und Dämpfereinheit 22 vor oder nach dem Koppeln des ersten Fahrzeug-Teilrahmens 12 mit dem zweiten Fahrzeug-Teilrahmen 54 entfernt werden könnte, so dass durch das Koppeln der Fahrzeug-Teilrahmen resultierende Fahrzeug nur ein dreirädriges Fahrzeug wäre, mit dem vorderen Laufraud 16, dem linken hinteren Laufrad 74a und dem rechten hinteren Laufrad 74b. Solch eine Ausgestaltung käme vor allem für ein elektromotorisch angetriebenes Fahrzeug in Betracht, bei dem beispielsweise die beiden hinteren Laufräder 74a und 74b mit einem Nabenmotor ausgestattet sein könnten. Alternativ oder zusätzlich könnte auch das vordere Laufrad 16 mit einem Nabenmotor ausgestattet sein. Für einen Antrieb durch Muskelkraft ist hingegen der Antrieb über das mittlere hintere Laufrad 24 die bevorzugte Variante, welches durchaus zusätzlich mit einem Naben-Elektromotor ausgestattet sein könnte.

Die beiden hinteren Sattel 72a und 72b können auf an sich bekannte Art und Weise durch Sattelstützen 78a und 78b des zweiten Fahrzeug-Teilrahmens 54 gehalten sein. Wie in den Figuren zu erkennen, kann der zweite Fahrzeug-Teilrahmen 54 im Bereich oberhalb der Stützbügel 70a und 70b vor den Stattelstützen 78a und 78b mit zwei Panelen 80a und 80b ausgestattet sein, die die Sicht auf die Rahmenkomponenten dahinter, im vorliegenden Ausführungsbeispiel auf das Rahmenwerk des zweiten Fahrzeug-Teilrahmens 54 mit den Sattelstützen 78a und 78b, versperren und beispielsweise Werbeaufdrucke tragen können. Diese Panele dienen auch der Bequemlichkeit der Beifahrer auf den hinteren Sätteln 72a und 72b, die ihre Beine auf der Vorderseite der Panele aufliegen haben können.

Wie in den Figuren dargestellt, kann der hintere zweite Fahrzeug-Teilrahmen 54 mit Abgrenzungs- und Haltebügel 84a und 84b an den Außenseiten des Hinterwagens ausgeführt sein, die einen Innenraum des Hinterwagens begrenzen und für die Insassen auch als Armstütze oder eine Art Geländer dienen können.

Der Hinterwagen 52 kann auch zum Lastentransport verwendet werden, indem anstelle der hinteren Sitze 72a und 72b eine Lastaufnahme 90 montiert wird, wie in Figur 7 dargestellt. Die Lastaufnahme 90 kann an der Unterseite mit nach unten vorstehenden Stützen ausgeführt sein, die in die Sattelstützen 78a und 78b eingreifen und dann genauso wie die Sattelstützen der hinteren Sättel 72a und 72b auf an sich bekannte Art und Weise festgeklemmt werden. Das Fahrzeug 80 der Figuren 6, 8 und 9 ist also umkonfigurierbar zu dem Fahrzeug 80' der Figur 7.

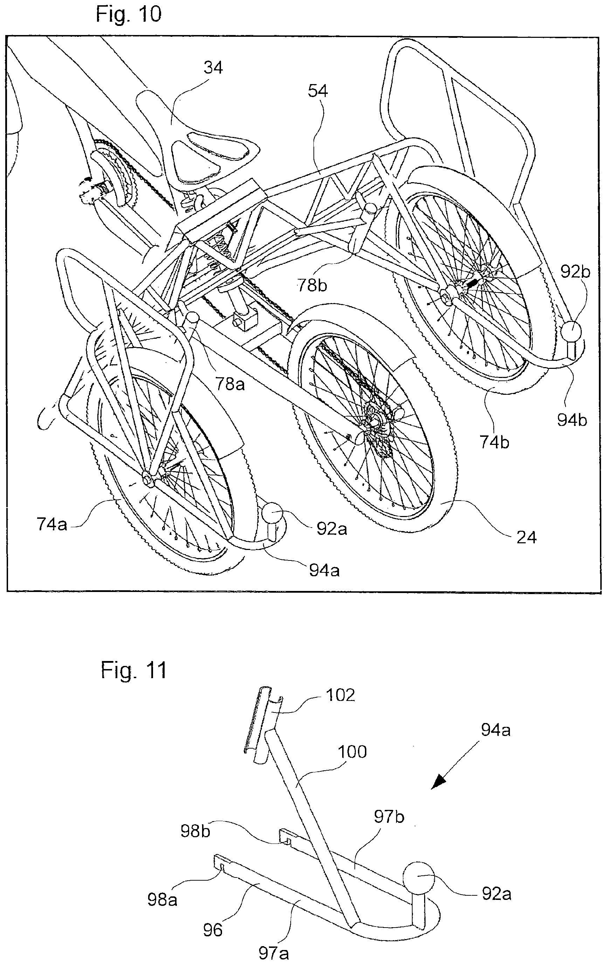

Wie in Figur 10 zu sehen, kann der Hinterwagen 52 mit Anhängerkupplungen 92a und 92b auf einer linken und rechten Seite des Hinterwagens ausgeführt sein, die mittels einer Halterungsanordnung 94a bzw. 94b auf der linken bzw. rechten Seite hinter dem linken bzw. rechten hinteren Laufrad 74a bzw. 74b gehalten sind. Die Halterungsanordnungen 94a und 94b können integrale Bestandteile des hinteren Fahrzeug-Teilrahmen 54 sein, oder an diesem angebracht sein.

Figur 11 zeigt eine Halterungsanordnung 94a zur Halterung der Anhängerkupplung 92a links hinten hinter dem hinteren Laufrad 74a. Ein entsprechende Halterungsanordnung zur Anbringung der Anhängerkupplung 92b hinten rechts hinter dem rechten hinteren Laufrad 74b kann entsprechend ausgeführt sein.

Die Halterungsanordnung 94a umfasst einen U-förmigen Tragbügel 96, der im Endbereich eines linken bzw. rechten Trägerbügelschenkels 97a bzw. 97b Aussparungen 98a und 98b aufweist, zum Eingreifen mit der Radachse des hinteren Laufrads 74a. Zum Abstützen von Vertikalkräften weist die Halterungsanordnung 94a ferner einen schräg verlaufenden Träger 100 auf, der an seinem freien Ende mittels einer Schelle 102 an einem sich primär in vertikal Richtung erstreckenden Rahmenschenkel des zweiten Fahrzeug-Teilrahmens 54 zu befestigen ist.

Im folgenden werden zur Veranschaulichungszwecken technische Daten von erfindungsgemäßen Fahrzeugen, also den ersten Fahrzeug-Teilrahmen bzw. den zweiten Fahrzeug-Teilrahmen aufweisenden Fahrzeugen und Hinterwägen, angegeben:
a) GW-Fahrrad mit 6-Gang - nach Wahl bis zu einer 18-Gang-Schaltung. Dieser Rahmen ist so konstruiert, dass er als GW-Pedelec, GW-S-Pedelec sowie als Kraftrad bis zu 11 kW einsetzbar ist. Zudem ist dieses Fahrzeug mit einer Andockvorrichtung ausgestattet, sodass jedermann ein weiteres Chassis mit 2 Rädern anbauen kann. Hierbei ist es möglich, 2 weitere Personen zu befördern oder als Transportfahrzeug zu nutzen.

| | |
|---|---|
| **Modell/Farbe:** | **GOLD**-(Kevelar) **BLACK-**(Carbon) + **WHITE-EDITION** (Kunststoff) |
| **Rahmen:** | Stahl, Aluminium oder Titan, Schwinge mit Zentraldumping-System |
| **Gabel:** | gefederte Springergabel oder nicht gefederte Stahlgabel |
| **Fender:** | Kunststoff, Carbon oder Kevelar |
| **Tank:** | Kunststoff, Carbon oder Kevelar (für Batterien bei E-Bike und Kraftrad) |
| **Gepäckträger:** | Aluminium |
| **Packtaschen:** | Kunststoff, Carbon oder Kevelar |
| **Sattel:** | gefedert oder nicht gefedert, verstellbar in verschiedenen Positionen nach vorne oder hinten, sowie nach oben oder nach unten. Doppelsitz mit Batterieninhalt für S-Bike oder Kraftradausfuehrung. |
| **Tretkurbel:** | 17cm mit einem oder 3-fach Kettenrad |
| **Bremse:** | vorne/hinten Hydraulikscheibenbremse |
| **Tretübersetzung:** | |
| **1. als Fahrrad:** | vorne: Kettenschaltung 1-3x, hinten: Nabenschaltung 1-5x |
| **2. als Pedelec 250W:** | Antrieb hinten: vorne Kettenschaltung 1-3x, hinten Kettenschaltung 1-6x |
| **3. als S-Pedelec 500W:** | Antrieb vorne: Kettenschaltung 1-3x, hinten: Nabenschaltung 1-5x |
| **4. 750/1000/1500W:** | Antrieb hinten: vorne Kettenschaltung 1-3x hinten: Kettenschaltung 1-6x |
| **5. als Kraftfahrzeug:** | Antrieb wahlweise von 2kW bis 11 kW |
| **Bereifung:** | vorne: 24" oder 26"x2-2.35 hinten: 20" oder 24"x3 |
| **Scheinwerfer:** | wahlweise Halogen oder LED Doppelscheinwerfer, eingefasst in Kunststoff, Carbon oder Kevelar, **Rücklicht:** LED |
| **Motor:** | als Pedelec, S-Pedelec Brushless-Direktläufer 250/500/750W/1000W als Kraftrad oder Kraftfahrzeug: Brushless-Direktläufer 2kW-11 kW |
| **Kontroller:** | Digital 24/36/48/60/72 Volt je nach Ausführung |
| **Batterie:** | **LiFePo4** 15Ah-24V oder 15Ah-36V, 15Ah-48V, Erweiterung mit Doppelsitz und Packtaschen bis zu 72V-45Ah = 3240 WH |
| **Reichweite:** | ab 30Ah über **100km** |
| **Gewicht:** | je nach Material und Ausrüstung zwischen 25 bis 55kg |

b) GW-Andockchassis, für Personentransport oder Lastentransport. Angedockt mit diesem Chassis ist das Fahrzeug gemäß vorherigem Abschnitt a) ein Fahrzeug mit 4 Rädern, welches wahlweise mit Front-, Heck- oder Allradantrieb eingesetzt werden kann. Es kann als 3-Rad eingesetzt werden, indem die Schwinge vom Kraftrad demontiert wird, wahlweise mit elektronisch gesteuertem Differential, mit Front-, Heck- oder Allradantrieb betrieben werden.

| | |
|---|---|
| **Modell/Farbe:** | **BLACK-**(Stahl) und **White-Edition** (Aluminium) |
| **Chassismaterial:** | Stahl, Aluminium oder Titan |
| **Konstruktion:** | **Triangel-Prinzip** |
| **Sattel:** | gefedert oder nichtgefedert oder Komfortsattel mit Batterien |
| **Sitzbank:** | gepolsterte Carbon konstruktion mit Batterien |
| **Als Lastenfahrzeug:** | Behälter aus Glasfaser oder Kohlefaser mit Einschubhülsen, die zum Einschub und zur Befestigung in der Sattelaufnahme dienen |
| **Bereifung:** | Rechts und links: nach Wahl 20 x3" oder 20x2,25" |
| **Fender:** | Kunststoff, Carbon oder Kevelar |
| **Armlehnen/Haltegriffe:** | Kunststoff, Carbon oder Kevelar mit LED-Rücklicht |
| **Gewicht:** | je nach Material und Ausstattung zwischen 18 und 30kg |
| **Reichweite:** | als umkonfigurierbares Fahrzeug bis zu **200km** |
| **ERWEITERUNG A:** | Chassis ist vorgesehen, um es mit einem Dach zu versehen, wahlweise mit Solarzellen, so dass bei Sonneneinstrahlung **Autarkbetrieb** möglich ist |
| **ERWEITERUNG B:** | ein Kupplungssystem, welches die Möglichkeit bietet, ein weiteres Chassis mit dem Fahrzeug zu verbinden, welches ebenfalls Personen oder Transporte befördern kann. |

Bereitgestellt wird unter anderem ein umkonfigurierbares Fahrzeug, umfassend einen ersten Fahrzeug-Teilrahmen (12) und einen zweiten Fahrzeug-Teilrahmen (54), die lösbar miteinander gekoppelt oder koppelbar sind, um den Fahrzeugrahmen eines wenigstens ein lenkbares vorderes Laufrad (16) und mehrere hintere Laufräder (24, 74a,74b) aufweisenden Fahrzeugs zu bilden; wobei das Fahrzeug in zumindest zwei der folgenden drei Konfigurationen verwendbar ist: i) in einer ersten Konfiguration, in der das Fahrzeug ein zweirädriges Fahrzeug (10) ist, welches von dem ersten Fahrzeug-Teilrahmen (12) mit einem vorderen Laufrad (16) und einem hinteren Laufrad (24) ohne den zweiten Fahrzeug-Teilrahmen (54) gebildet ist; und ii) in einer zweiten Konfiguration, in der das Fahrzeug ein vierrädriges Fahrzeug (80; 80') ist, welches von dem ersten Fahrzeug-Teilrahmen (12) mit dem vorderen Laufrad (16) und dem hinteren Laufrad (24) als mittleres hinteres Laufrad und dem mit dem ersten Fahrzeug-Teilrahmen (12) gekoppelten zweiten Fahrzeug-Teilrahmen (54) mit einem linken hinteren Laufrad (74a) und einem rechten hinteren Laufrad (74b) gebildet ist, derart dass das mittlere hintere Laufrad (24) zwischen dem linken hinteren Laufrad (74a) und dem rechten hinteren Laufrad (74b) angeordnet ist; und iii) in einer dritten Konfiguration, in der das Fahrzeug ein dreirädriges Fahrzeug ist, welches von dem ersten Fahrzeug-Teilrahmen mit dem vorderen Laufrad und dem mit dem ersten Fahrzeug-Teilrahmen gekoppelten zweiten Fahrzeug-Teilrahmen mit dem linken hinteren Laufrad und dem rechten hinteren Laufrad gebildet ist, ohne ein mittels der hinteren Achsaufnahme gelagertes hinteres Laufrad des ersten Fahrzeug-Teilrahmens.

## Patentansprüche

1. Umkonfigurierbares Fahrzeug, umfassend einen ersten Fahrzeug-Teilrahmen (12) und einen zweiten Fahrzeug-Teilrahmen (54), die lösbar miteinander gekoppelt oder koppelbar sind, um den Fahrzeugrahmen eines wenigstens ein lenkbares vorderes Laufrad (16) und mehrere hintere Laufräder (24, 74a,74b) aufweisenden Fahrzeugs zu bilden; wobei der erste Fahrzeug-Teilrahmen (12) einen Vorderbau mit einer Gabelschaftaufnahme, in der ein Gabelschaft einer das vordere Laufrad (16) mittels einer Laufradachse drehbar lagernden Gabel (14) drehbar gelagert ist, und einen Hinterbau mit einem Fahrersitz (34) oder/und einer Fahrersitzhalterung (30) und einer hinteren Achsaufnahme zur drehbaren Lagerung eines hinteren Laufrads (24) mittels einer Laufradachse aufweist;
wobei der zweite Fahrzeug-Teilrahmen (54) im mit dem ersten Fahrzeug-Teilrahmen (12) gekoppelten Zustand sich seitlich zum ersten Fahrzeug-Teilrahmen (12) über diesen hinweg oder diesen hinten passierend erstreckt und eine linke Achsaufnahme aufweist, welche mittels einer Laufradachse ein linkes hinteres Laufrad (74a) drehbar lagert, und eine rechte Achsaufnahme aufweist, welche mittels einer Laufradachse ein rechtes hinteres Laufräder (74b) drehbar lagert;
wobei das Fahrzeug in den folgenden drei Konfigurationen verwendbar ist:
i) in einer ersten Konfiguration, in der das Fahrzeug ein zweirädriges Fahrzeug (10) ist, welches von dem ersten Fahrzeug-Teilrahmen (12) mit dem vorderen Laufrad (16) und dem mittels der hinteren Achsaufnahme gelagerten hinteren Laufrad (24) ohne den zweiten Fahrzeug-Teilrahmen (54) gebildet ist; und
ii) in einer zweiten Konfiguration, in der das Fahrzeug ein vierrädriges Fahrzeug (80; 80') ist, welches von dem ersten Fahrzeug-Teilrahmen (12) mit dem vorderen Laufrad (16) und dem mittels der hinteren Achsaufnahme gelagerten hinteren Laufrad (24) als mittleres hinteres Laufrad und dem mit dem ersten Fahrzeug-Teilrahmen (12) gekoppelten zweiten Fahrzeug-Teilrahmen (54) mit dem linken hinteren Laufrad (74a) und dem rechten hinteren Laufrad (74b) gebildet ist, derart dass das mittlere hintere Laufrad (24) zwischen dem linken hinteren Laufrad (74a) und dem rechten hinteren Laufrad (74b) angeordnet ist; und
iii) in einer dritten Konfiguration, in der das Fahrzeug ein dreirädriges Fahrzeug ist, welches von dem ersten Fahrzeug-Teilrahmen mit dem vorderen Laufrad und dem mit dem ersten Fahrzeug-Teilrahmen gekoppelten zweiten Fahrzeug-Teilrahmen mit dem linken hinteren Laufrad und dem rechten hinteren Laufrad gebildet ist, ohne ein mittels der hinteren Achsaufnahme gelagertes hinteres Laufrad des ersten Fahrzeug-Teilrahmens;
wobei der erste Fahrzeug-Teilrahmen (12) mit einer Hinterbaufederung ausgeführt ist;
wobei die Hinterbaufederung eine die hintere Achsaufnahme aufweisende, relativ zu einem den Fahrersitz (34) bzw. die Fahrersitzhalterung (30) aufweisenden Abschnitt des ersten Fahrzeug-Teilrahmens (12) schwenkbare Schwinge (20) und wenigstens eine die Schwinge (20) relativ zu dem den Fahrersitz (34) bzw. die Fahrersitzhalterung (30) aufweisenden Abschnitt des ersten Fahrzeug-Teilrahmens (12) federnd abstützende Federeinheit oder Feder- und Dämpfereinheit (22) aufweist;
und wobei die Schwinge (20) am ersten Fahrzeug-Teilrahmen (12) lösbar befestigt ist und für die Realisierung der dritten Konfiguration vom ersten Fahrzeug-Teilrahmen (12) entfernbar ist..

2. Fahrzeug nach Anspruch 1, **dadurch gekennzeichnet, dass** in der zweiten Konfiguration das mittlere hintere Laufrad (24) gegenüber dem linken hinteren Laufrad (74a) und dem rechten hinteren Laufrad (74b) nach hinten versetzt ist.

3. Fahrzeug nach Anspruch 1 oder 2, **dadurch gekennzeichnet, dass** zumindest das mittels der hinteren Achsaufnahme des ersten Fahrzeug-Teilrahmens (12) gelagerte hintere Laufrad (24) ein motorisch, vorzugsweise elektromotorisch, oder/und mit Muskelkraft durch wenigstens einen Fahrer oder Insassen des Fahrzeugs antreibbares Antriebs-Laufrad (24) ist.

4. Fahrzeug nach einem der Ansprüche 1 bis 3, **dadurch gekennzeichnet, dass** das linke hintere Laufrad und das rechte hintere Laufrad jeweils ein motorisch, vorzugsweise elektromotorisch antreibbares Antriebs-Laufrad ist oder/und dass das vordere Laufrad ein motorisch, vorzugsweise elektromotorisch antreibbares Antriebs-Laufrad ist.

5. Fahrzeug nach einem der Ansprüche 1 bis 4, **gekennzeichnet durch** wenigstens eines, vorzugsweise mehrere der folgenden Merkmale:
- die Fahrersitzhalterung ist als Sattelstützenhalterung (30) zur Halterung einer Sattelstütze (32) ausgeführt;
- die Gabel ist als Federgabel (14) ausgeführt;
- zumindest das mittels der hinteren Achsaufnahme des ersten Fahrzeug-Teilrahmens (12) gelagerte hintere Laufrad (24) ist mit Muskelkraft durch das Treten von Pedalen antreibbar;
- das Fahrzeug (10; 80; 80') ist vermittels wenigstens einer Antriebsdrehmoment zu dem mittels der hinteren Achsaufnahme des ersten Fahrzeug-Teilrahmens (12) gelagerten hinteren Laufrad (24) übertragenden Antriebskette antreibbar;
- das Antriebsmoment ist vermittels eines Fahrzeuggetriebes in wählbaren Gängen mit unterschiedlichen Übersetzungen oder Untersetzungen zu dem mittels der hinteren Achsaufnahme des ersten Fahrzeug-Teilrahmens (12) gelagerten hinteren Laufrad (24) übertragbar;
- das Fahrzeuggetriebe weist eine Kettenschaltungsanordnung auf;
- die Kettenschaltungsanordnung weist eine durch Pedalieren antreibbaren vorderen Kettenblättern zugeordnete vordere Kettenschaltung auf;
- das Fahrzeug ist mit wenigstens einem Motor oder Hilfsmotor in Form eines Brennkraftmotors oder - vorzugsweise - Elektromotors ausgeführt, von dem ein Antriebsdrehmoment auf das mittels der hinteren Achsaufnahme des ersten Fahrzeug-Teilrahmens gelagerte hintere Laufrad oder/und auf das linke und das rechte hintere Laufrad oder/und auf das vordere Laufrad übertragbar ist;
- das mittels der hinteren Achsaufnahme des ersten Fahrzeug-Teilrahmens gelagerte hintere Laufrad ist mit einem Motor bzw. Hilfsmotor in Form eines Nabenmotors ausgeführt;
- das vordere Laufrad ist mit einem Motor bzw. Hilfsmotor in Form eines Nabenmotors ausgeführt;
- das linke hintere Laufrad und das rechte hintere Laufrad sind jeweils mit einem Motor bzw. Hilfsmotor in Form eines Nabenmotors ausgeführt.

6. Fahrzeug nach einem der Ansprüche 1 bis 5, **dadurch gekennzeichnet, dass** das Fahrzeug (80; 80') in der zweiten Konfiguration oder/und in der dritten Konfiguration wenigstens eine zumindest durch den zweiten Fahrzeug-Teilrahmen (54) gebildete oder gehaltene Lastaufnahme (90) aufweist oder dass das Fahrzeug (80; 80') dafür konfigurierbar ist, dass in der zweiten Konfiguration oder/und in der dritten Konfiguration wenigstens eine solche Lastaufnahme (90) bereitgestellt ist, beispielsweise eine linke Lastaufnahme auf einer linken Seite des ersten Fahrzeug-Teilrahmens und eine rechte Lastaufnahme auf einer rechten Seite des ersten Fahrzeug-Teilrahmens oder eine sich seitlich zum ersten Fahrzeug-Teilrahmen (12) über diesen hinweg oder diesen hinten passierend erstreckende Lastaufnahme (90).

7. Fahrzeug nach einem der Ansprüche 1 bis 6, **dadurch gekennzeichnet, dass** das Fahrzeug (80; 80') in der zweiten Konfiguration oder/und in der dritten Konfiguration gegenüber der ersten Konfiguration wenigstens zwei zusätzliche, zumindest durch den zweiten Fahrzeug-Teilrahmen (54) abgestützte Personensitzplätze (72a, 72b) bereitstellt oder dass das Fahrzeug (80; 80') dafür konfigurierbar ist, dass in der zweiten Konfiguration oder/und in der dritten Konfiguration wenigstens zwei solche zusätzlichen Personensitzplätze (72a, 72b) bereitgestellt sind, beispielsweise wenigstens ein linker Personensitz (72a) auf einer linken Seite des ersten Fahrzeug-Teilrahmens (12) und wenigstens ein rechter Personensitz (72b) auf einer rechten Seite des ersten Fahrzeug-Teilrahmens (12) oder eine sich seitlich zum ersten Fahrzeug-Teilrahmen über diesen hinweg oder diesen hinten passierend erstreckende, mehrere Personensitzplätze bereitstellende Sitzbank.

8. Fahrzeug nach einem der Ansprüche 1 bis 7, **dadurch gekennzeichnet, dass** der zweite Fahrzeug-Teilrahmen (54) eine in der zweiten Konfiguration oder/und in der dritten Konfiguration links des ersten Fahrzeug-Teilrahmens (12) angeordnete linke Sitz- oder Last-Halterung (78a) und eine in der zweiten Konfiguration oder/und in der dritten Konfiguration rechts des ersten Fahrzeug-Teilrahmens (12) angeordnete rechte Sitz- oder Lasthalterung (78b) aufweist, die vorzugsweise als Sattelstützenhalterungen (78a, 78b) ausgeführt sind.

9. Fahrzeug nach einem der Ansprüche 1 bis 8, **dadurch gekennzeichnet, dass** der zweite Fahrzeug-Teilrahmen (54) eine Stützenanordnung (70a, 70b) aufweist, die in der zweiten Konfiguration oder/und in der dritten Konfiguration als den Personensitzplätzen des zweiten Fahrzeug-Teilrahmens zugeordnete Fußstützenanordnung (70a, 70b) dient oder/und im unbenutzten Zustand entsprechend der ersten Konfiguration als Rahmenstützenanordnung (70a, 70b) zum Abstützen auf einem Untergrund und damit zum definierten Abstellen des zweiten Fahrzeug-Teilrahmens auf dem Untergrund dient.

10. Fahrzeug nach einem der Ansprüche 1 bis 9, **dadurch gekennzeichnet, dass** der Hinterbau des ersten Fahrzeug-Teilrahmens (12) eine zur Abstützung von Kippkräften in einer seitlichen Querrichtung zum ersten Fahrzeug-Teilrahmenrahmen und zur Abstützung von Kippkräften in einer zur seitlichen Querrichtung orthogonalen Hochrichtung des ersten Fahrzeug-Teilrahmenrahmens geeignete Koppeleinrichtung (50) aufweist, die mit einer ebenfalls zur Abstützung von Kippkräften in dieser seitlichen Querrichtung und in dieser Hochrichtung geeignete Gegen-Koppeleinrichtung (53) des zweiten Fahrzeug-Teilrahmens (54) gekoppelt oder koppelbar ist, vorzugsweise formschlüssig gekoppelt oder koppelbar ist.

11. Fahrzeug nach Anspruch 10, **dadurch gekennzeichnet, dass** die Koppeleinrichtung einen ersten Koppelrahmen (50) aufweist, welcher mit einem zweiten Koppelrahmen (53) der Gegen-Koppeleinrichtung gekoppelt oder koppelbar ist, vorzugsweise formschlüssig gekoppelt oder koppelbar ist, wobei die Koppelrahmen vorzugsweise als Winkelrahmen ausgeführt sind.

12. Fahrzeug nach Anspruch 11, **dadurch gekennzeichnet, dass** sich die Federeinheit oder Feder- und Dämpfereinheit (22) oder/und die Antriebskette zumindest in der ersten Konfiguration durch einen von Koppelrahmenabschnitten des ersten Koppelrahmens (50) umgebenen Innenbereich des Koppelrahmens erstreckt, sowie, zumindest in der zweiten Konfiguration des Fahrzeugs, durch einen von Koppelrahmenabschnitten des zweiten Koppelrahmens (53) umgebenen Innenbereich des zweiten Koppelrahmens (53) erstreckt, wobei der zweite Koppelrahmen mit einer Koppelrahmenlücke ausgeführt ist, durch welche die Federeinheit oder Feder- und Dämpfereinheit (22) oder/und die Antriebskette im Zuge des Koppelns des zweiten Fahrzeug-Teilrahmens mit dem ersten Fahrzeug-Teilrahmen in den Innenbereich des zweiten Koppelrahmens einführbar ist.

13. Fahrzeug nach Anspruch 11 oder 12, dass die Koppelrahmen mit Passlöchern (60; 62) und in ein jeweiliges Passloch eingreifenden, an einem jeweiligen Koppelrahmen fest verbundenen Passbolzen (64) oder/und mit Passlöchern (60; 62) zur Aufnahme ein jeweiliges Passloch beider Koppelrahmen durchsetzender, gegenüber den Koppelrahmen gesonderter Passbolzen ausgeführt sind, zum zum formschlüssigen Koppeln und relativen Zentrieren der Koppelrahmen (50, 53) mittels der Passbolzen und Passlöcher.

14. Fahrzeug nach einem der Ansprüche 11 bis 13, **dadurch gekennzeichnet, dass** die Koppelrahmen mit Löchern (60; 62) und in ein jeweiliges Loch eingreifenden, an einem jeweiligen Koppelrahmen fest verbundenen Schraubbolzen oder/und mit Löchern (60; 62) zur Aufnahme ein jeweiliges Loch beider Koppelrahmen durchsetzender, gegenüber den Koppelrahmen gesonderter Schraubbolzen ausgeführt sind, zum formschlüssigen Koppeln und Verbinden der Koppelrahmen (50; 53) mittels der Schraubbolzen und zugehöriger Schraubmuttern.

15. Fahrzeug nach einem der Ansprüche 1 bis 14, **dadurch gekennzeichnet, dass** der erste Fahrzeug-Teilrahmen oder/und der zweite Fahrzeug-Teilrahmen (54) mit wenigstens einer Anhänger-Kupplungseinrichtung (92a, 92b) ausgestattet ist.

## Claims

1. A configurable vehicle comprising a first vehicle subframe (12) and a second vehicle subframe (54) which are releasably coupled or can be releasably coupled to each other, in order to form the vehicle frame of a vehicle comprising at least one steerable front wheel (16) and a plurality of rear wheels (24, 74a, 74b);
wherein the first vehicle subframe (12) comprises a front part having a fork steerer tube, in which a fork steerer of a fork (14), which is rotatably mounting the front wheel (16) by means of a wheel axle, is rotatably mounted, and a rear part having a driver's seat (34) and/or a driver's seat holder (30) and a rear axle receptacle for rotatably mounting a rear wheel (24) by means of a wheel axle;
wherein the second vehicle subframe (54), in the coupled state to the first vehicle subframe (12), extends, relative to the first vehicle subframe (12), laterally, across or behind it, and comprises a left axle receptacle which rotatably mounts a left rear wheel (74a) by means of a wheel axle, and comprises a right axle receptacle, which rotatably mounts a right rear wheel (74b) by means of a wheel axle;
wherein the vehicle can be used in the following three configurations:
i) in a first configuration in which the vehicle is a two-wheeled vehicle (10) which is formed by the first vehicle subframe (12) having the front wheel (16) and the rear wheel (24), said rear wheel being mounted by means of the rear axle receptacle, without the second vehicle subframe (54); and
ii) in a second configuration in which the vehicle is a four-wheeled vehicle (80; 80') which is formed by the first vehicle subframe (12) having the front wheel (16) and the rear wheel (24) as rear middle wheel, said rear wheel being mounted by means of the rear axle receptacle, and the second vehicle subframe (54) coupled to the first vehicle subframe (12), said second vehicle subframe having the left rear wheel (74a) and the right rear wheel (74b), such that the middle rear wheel (24) is disposed between the left rear wheel (74a) and the right rear wheel (74b); and
iii) in a third configuration in which the vehicle is a three-wheeled vehicle formed by the first vehicle subframe having the front wheel and the second vehicle subframe coupled to the first vehicle subframe, said second vehicle subframe having the left rear wheel and the right rear wheel, without a rear wheel of the first vehicle subframe mounted by means of the rear axle receptacle;
wherein the first vehicle subframe (12) is designed with a rear suspension;
wherein the rear suspension has a swingarm (20) which comprises the rear axle receptacle and is pivotable relative to a portion of the first vehicle subframe (12) comprising the driver's seat (34) or the driver's seat holder (30) and at least one spring unit or spring and damper unit (22) resiliently supporting the swingarm (20) relative to the portion of the first vehicle subframe (12) comprising the driver's seat (34) or the driver's seat holder (30);
and wherein the swingarm (20) is releasably secured to the first vehicle subframe (12) and is removable from the first vehicle subframe (12) for the realization of the third configuration.

2. The vehicle according to claim 1, **characterized in that** in the second configuration, the middle rear wheel (24) is offset to the rear relative to the left rear wheel (74a) and the right rear wheel (74b).

3. The vehicle according to claim 1 or 2, **characterized in that** at least the rear wheel (24) mounted by means of the rear axle receptacle of the first vehicle subframe (12) is a drive wheel (24), which is drivable by a motor, preferably by an electric motor, and/or by muscle power by at least one driver or passenger of the vehicle.

4. The vehicle according to any of claims 1 to 3, **characterized in that** the left rear wheel and the right rear wheel are each a drive wheel, which is drivable by a motor, preferably by an electric motor, and/or **in that** the front wheel is a drive wheel, which is drivable by a motor, preferably by an electric motor.

5. The vehicle according to any of claims 1 to 4, **characterized by** at least one, preferably a plurality of the following features:
- the driver's seat holder is designed as a seat post holder (30) for holding a seat post (32);
- the fork is designed as a suspension fork (14);
- at least the rear wheel (24) which is mounted by means of the rear axle receptacle of the first vehicle subframe (12) is drivable by muscle power by pedalling;
- the vehicle (10; 80; 80') is drivable by means of at least one drive chain transmitting driving torque to the rear wheel (24) which is mounted by means of the rear axle receptacle of the first vehicle subframe (12);
- the driving torque is transmitted by means of a vehicle transmission in selectable gears with different gear ratios or gear reductions to the rear wheel (24) mounted by means of the rear axle receptacle of the first vehicle subframe (12);
- the vehicle transmission has a derailleur assembly;
- the derailleur assembly includes a front derailleur associated with front chain rings which are drivable by pedalling;
- the vehicle is designed with at least one motor or auxiliary motor in the form of an internal combustion engine or - preferably - of an electric motor, of which a driving torque is transferable to the rear wheel, which is mounted by means of the rear axle receptacle of the first vehicle subframe, and/or to the left and to the right rear wheel and/or to the front wheel;
- the rear wheel, which is mounted by means of the rear axle receptacle of the first vehicle subframe, is designed with a motor or auxiliary motor in the form of a hub motor;
- the front wheel is designed with a motor or an auxiliary motor in the form of a hub motor;
- the left rear wheel and the right rear wheel are each provided with a motor or auxiliary motor in the form of a hub motor.

6. The vehicle according to any of claims 1 to 5, **characterized in that** the vehicle (80; 80') in the second configuration and/or in the third configuration comprises at least one load receiver (90) which is at least formed or held by the second vehicle subframe (54) or **in that** the vehicle (80; 80') can be configured to provide at least one such load receiver (90) in the second configuration and/or in the third configuration, for example a left load receiver on a left side of the first vehicle subframe and a right load receiver on a right side of the first vehicle subframe or a load receiver (90) extending, relative to the first vehicle subframe (12), laterally, across or behind it.

7. The vehicle according to any of claims 1 to 6, **characterized in that**, in the second configuration and/or in the third configuration, compared to the first configuration, the vehicle (80; 80') provides at least two additional passenger seats (72a, 72b) supported by at least the second vehicle subframe (54) or **in that** the vehicle (80; 80') can be configured to provide at least two such additional passenger seats (72a, 72b) in the second configuration and/or in the third configuration, for example, at least one left passenger seat (72a) on a left side of the first vehicle subframe (12) and at least one right passenger seat (72b) on a right side of the first vehicle subframe (12) or a bench extending, relative to the first vehicle subframe, laterally, across or behind it, said bench providing several passenger seats.

8. The vehicle according to any of claims 1 to 7, **characterized in that** the second vehicle subframe (54) comprises a left seat or load holder (78a) which, in the second configuration and/or in the third configuration, is arranged to the left of the first vehicle sub-frame (12), and a right seat or load holder (78b) which, in the second configuration and/or in the third configuration, is arranged to the right of the first vehicle subframe (12), which holders are preferably designed as seat post holders (78a, 78b).

9. The vehicle according to any of claims 1 to 8, **characterized in that** the second vehicle subframe (54) comprises a support assembly (70a, 70b), which is used, in the second configuration and/or in the third configuration, as a footrest assembly (70a, 70b) associated with the passenger seats of the second vehicle subframe and/or is used in the unused state according to the first configuration as a frame support assembly (70a, 70b) for supporting on a ground and thus for defined parking of the second vehicle subframe on the ground.

10. The vehicle according to any of claims 1 to 9, **characterized in that** the rear part of the first vehicle subframe (12) comprises a coupling device (50) which is suitable for supporting tilting forces in a lateral cross-direction relative to the first vehicle subframe and for supporting tilting forces in an orthogonal vertical direction, relative to the lateral cross-direction, of the first vehicle subframe, which coupling device is coupled or can be coupled, preferably is positively coupled or can be positively coupled, to a counter coupling device (53) of the second vehicle subframe (54), which device is likewise suitable for supporting tilting forces in this lateral cross-direction and in this vertical direction.

11. The vehicle according to claim 10, **characterized in that** the coupling device comprises a first coupling frame (50) which is coupled or can be coupled, preferably is positively coupled or can be positively coupled, to a second coupling frame (53) of the counter coupling device, wherein the coupling frames are preferably designed as angle frames.

12. The vehicle according to claim 11, **characterized in that** the spring unit or spring and damper unit (22) and/or the drive chain extends/extend at least in the first configuration through an inner region of the coupling frame surrounded by coupling frame sections of the first coupling frame (50), and, at least in the second configuration of the vehicle, extending through an inner region of the second coupling frame (53) surrounded by coupling frame sections of the second coupling frame (53), wherein the second coupling frame is designed with a coupling frame gap through which the spring unit or spring and damper unit (22) and/or the drive chain is inserted into the inner region of the second coupling frame in the course of coupling the second vehicle subframe to the first vehicle subframe.

13. The vehicle according to claim 11 or 12, **characterized in that** the coupling frames are designed with fitting holes (60; 62) and fitting bolts (64) engaging in a fitting hole in each case, said fitting bolts being fixedly connected to a coupling frame in each case, and/or are designed with fitting holes (60; 62) for receiving fitting bolts penetrating a fitting hole in each of the two coupling frames, said fitting bolts being separate with respect to the coupling frames, in order to ensure the positive coupling and relative centring of the coupling frames (50, 53) by means of the fitting bolts and fitting holes.

14. The vehicle according to any of claims 11 to 13, **characterized in that** the coupling frames are designed with holes (60; 62) and threaded bolts engaging in a hole in each case, said threaded bolts being fixedly connected to a coupling frame in each case, and/or are designed with holes (60; 62) for receiving threaded bolts penetrating a hole in each of the two coupling frames, said threaded bolts being separate with respect to the coupling frames, in order to ensure the positive coupling and connecting of the coupling frames (50; 53) by means of the threaded bolts and associated threaded nuts.

15. The vehicle according to any of claims 1 to 14, **characterized in that** the first vehicle subframe and/or the second vehicle subframe (54) is/are equipped with at least one trailer coupling device (92a, 92b).

## Revendications

1. Véhicule convertible, comprenant un premier châssis partiel de véhicule (12) et un second châssis partiel de véhicule (54), qui sont couplés ou peuvent être couplés de manière amovible l'un à l'autre afin de former le châssis de véhicule d'un véhicule présentant au moins une roue mobile avant (16) pouvant être dirigée et plusieurs roues mobiles arrière (24, 74a, 74b) ;
dans lequel le premier châssis partiel de véhicule (12) présente une structure avant avec un logement de tige de fourche, dans lequel une tige de fourche d'une fourche (14) supportant de manière à pouvoir tourner la roue mobile avant (16) au moyen d'un essieu de roue mobile est supportée de manière à pouvoir tourner, et une structure arrière avec un siège de conducteur (34) et/ou une fixation de siège de conducteur (30) et un logement d'essieu arrière servant à supporter de manière à pouvoir tourner une roue mobile arrière (24) au moyen d'un essieu de roue mobile ; dans lequel le second châssis partiel de véhicule (54) s'étend, dans l'état couplé au premier châssis partiel de véhicule (12), de manière latérale par rapport au premier châssis partiel de véhicule (12) au-delà de celui-ci ou en s'adaptant à l'arrière à celui-ci et présente un logement d'essieu gauche, lequel supporte de manière à pouvoir tourner au moyen d'un essieu de roue mobile une roue mobile arrière gauche (74a), et présente un logement d'essieu droit, lequel supporte de manière à pouvoir tourner au moyen d'un essieu de roue mobile une roue mobile arrière droite (74b) ;
dans lequel le véhicule peut être utilisé dans les trois configurations suivantes :
i) dans une première configuration, dans laquelle le véhicule est un véhicule (10) à deux roues, lequel est formé par le premier châssis partiel de véhicule (12) avec la roue mobile avant (16) et la roue mobile arrière (24) supportée au moyen du logement d'essieu arrière sans le second châssis partiel de véhicule (54) ; et
ii) dans une deuxième configuration, dans laquelle le véhicule est un véhicule à quatre roues (80 ; 80'), lequel est formé par le premier châssis partiel de véhicule (12) avec la roue mobile avant (16) et la roue mobile arrière (24) supportée au moyen du logement d'essieu arrière en tant que roue mobile arrière centrale et le second châssis partiel de véhicule (54) couplé au premier châssis partiel de véhicule (12) avec la roue mobile arrière gauche (74a) et la roue mobile arrière droite (74b) de telle manière que la roue mobile arrière centrale (24) est disposée entre la roue mobile arrière gauche (74a) et la roue mobile arrière droite (74b) ; et
iii) dans une troisième configuration, dans laquelle le véhicule est un véhicule à trois roues, lequel est formé par le premier châssis partiel de véhicule avec la roue mobile avant et le second châssis partiel de véhicule couplé au premier châssis partiel de véhicule avec la roue mobile arrière gauche et la roue mobile arrière droite sans une roue mobile arrière, supportée au moyen du logement d'essieu arrière, du premier châssis partiel de véhicule ;
dans lequel le premier châssis partiel de véhicule (12) est réalisé avec une suspension de structure arrière ;
dans lequel la suspension de structure arrière présente un bras oscillant (20) présentant le logement d'essieu arrière, pouvant pivoter par rapport à une section, présentant le siège de conducteur (34) ou la fixation de siège de conducteur (30), du premier châssis partiel de véhicule (12) et au moins une unité de ressorts ou une unité de ressorts et d'amortisseurs (22) soutenant sur ressorts le bras oscillant (20) par rapport à la section, présentant le siège de conducteur (34) ou la fixation de siège de conducteur (30), du premier châssis partiel de véhicule (12) ;
et dans lequel le bras oscillant (20) est fixé de manière amovible au niveau du premier châssis partiel de véhicule (12) et peut être retiré du premier châssis partiel de véhicule (12) pour la réalisation de la troisième configuration.

2. Véhicule selon la revendication 1, **caractérisé en ce que** dans la deuxième configuration, la roue mobile arrière centrale (24) est décalée vers l'arrière par rapport à la roue mobile arrière gauche (74a) et la roue mobile arrière droite (74b).

3. Véhicule selon la revendication 1 ou 2, **caractérisé en ce qu'**au moins la roue mobile arrière (24) supportée au moyen du logement d'essieu arrière du premier châssis partiel de véhicule (12) est une roue mobile d'entraînement (24) pouvant être entraînée par un moteur, de préférence par un moteur électrique et/ou avec de la force musculaire par au moins un conducteur ou passager du véhicule.

4. Véhicule selon l'une quelconque des revendications 1 à 3, **caractérisé en ce que** la roue mobile arrière gauche et la roue mobile arrière droite sont respectivement une roue mobile d'entraînement pouvant être entraînée par un moteur, de préférence par un moteur électrique, et/ou que la roue mobile avant est une roue mobile d'entraînement pouvant être entraînée par un moteur, de préférence par un moteur électrique.

5. Véhicule selon l'une quelconque des revendications 1 à 4, **caractérisé par** au moins une, de préférence plusieurs des caractéristiques suivantes :
- la fixation de siège de véhicule est réalisée sous la forme d'une fixation de tube porte-selle (30) servant à la fixation d'un tube porte-selle (32) ;
- la fourche est réalisée sous la forme d'une fourche à ressorts (14) ;
- au moins la roue mobile arrière (24) supportée au moyen du logement d'essieu arrière du premier châssis partiel de véhicule (12) peut être entraînée avec de la force musculaire en pédalant ;
- le véhicule (10 ; 80 ; 80') peut être entraîné par l'entremise d'au moins une chaîne d'entraînement transmettant un couple de rotation d'entraînement à la roue mobile arrière (24) supportée au moyen du logement d'essieu arrière du premier châssis partiel de véhicule (12) ;
- le couple d'entraînement peut être transmis par l'entremise d'une transmission de véhicule dans des rapports pouvant être sélectionnés avec des démultiplications et réductions différentes à la roue mobile arrière (24) supportée au moyen du logement d'essieu arrière du premier châssis partiel de véhicule (12) ;
- la transmission de véhicule présente un ensemble formant dérailleur ;
- l'ensemble formant dérailleur présente un dérailleur avant associé à des plateaux avant pouvant être entraînés en pédalant ;
- le véhicule est réalisé avec au moins un moteur ou un moteur auxiliaire sous la forme d'un moteur à combustion interne ou - de préférence - d'un moteur électrique, par lequel un couple de rotation d'entraînement peut être transmis sur la roue mobile arrière supportée au moyen du logement d'essieu arrière du premier châssis partiel de véhicule et/ou sur la roue mobile arrière gauche et la roue mobile arrière droite et/ou sur la roue mobile avant ;
- la roue mobile arrière supportée au moyen du logement d'essieu arrière du premier châssis partiel de véhicule est réalisée avec un moteur ou un moteur auxiliaire sous la forme d'un moteur moyeu ;
- la roue mobile avant est réalisée avec un moteur ou un moteur auxiliaire sous la forme d'un moteur moyeu ;
- la roue mobile arrière gauche et la roue mobile arrière droite sont réalisées respectivement avec un moteur ou un moteur auxiliaire sous la forme d'un moteur moyeu.

6. Véhicule selon l'une quelconque des revendications 1 à 5, **caractérisé en ce que** le véhicule (80 ; 80') présente dans la deuxième configuration et/ou dans la troisième configuration au moins un logement de charges (90) formé ou maintenu au moins par le second châssis partiel de véhicule (54), ou que le véhicule (80 ; 80') peut être configuré pour que dans la deuxième configuration et/ou dans la troisième configuration au moins un logement de charges (90) de ce type soit fourni, par exemple un logement de charges gauche sur un côté gauche du premier châssis partiel de véhicule et un logement de charges droit sur un côté droit du premier châssis partiel de véhicule ou un logement de charges (90) s'étendant latéralement par rapport au premier châssis partiel de véhicule (12) au-delà de celui-ci ou en s'adaptant à l'arrière à celui-ci.

7. Véhicule selon l'une quelconque des revendications 1 à 6, **caractérisé en ce que** le véhicule (80 ; 80') fournit dans la deuxième configuration et/ou dans la troisième configuration, par rapport à la première configuration, au moins deux places assises pour des personnes (72a, 72b) supplémentaires soutenues au moins par le second châssis partiel de véhicule (54), ou que le véhicule (80 ; 80') peut être configuré pour que dans la deuxième configuration et/ou dans la troisième configuration, au moins deux places assises pour des personnes (72a, 72b) supplémentaires de ce type soient fournies, par exemple au moins un siège pour une personne gauche (72a) sur un côté gauche du premier châssis partiel de véhicule (12) et au moins un siège pour une personne droit (72b) sur un côté droit du premier châssis partiel de véhicule (12) ou une banquette fournissant plusieurs places assises pour des personnes, s'étendant latéralement par rapport au premier châssis partiel de véhicule au-delà de celui-ci ou en s'adaptant à celui-ci.

8. Véhicule selon l'une quelconque des revendications 1 à 7, **caractérisé en ce que** le second châssis partiel de véhicule (54) présente une fixation de siège ou de charge gauche (78a) disposée dans la deuxième configuration et/ou dans la troisième configuration à gauche du premier châssis partiel de véhicule (12) et une fixation de siège ou de charge droite (78b) disposée dans la deuxième configuration et/ou dans la troisième configuration à droite du premier châssis partiel de véhicule (12), lesquelles sont réalisées de préférence sous la forme de fixations de tube porte-selle (78a, 78b).

9. Véhicule selon l'une quelconque des revendications 1 à 8, **caractérisé en ce que** le second châssis partiel de véhicule (54) présente un ensemble de montants (70a, 70b), qui fait office dans la deuxième configuration et/ou dans la troisième configuration d'un ensemble formant repose-pied (70a, 70b) associé aux places assises pour des personnes du second châssis partiel de véhicule et/ou, dans l'état inutilisé, conformément à la première configuration, fait office d'ensemble de montants de châssis (70a, 70b) servant au soutien sur un sol et ainsi servant à déposer de manière définie le second châssis partiel de véhicule sur le sol.

10. Véhicule selon l'une quelconque des revendications 1 à 9, **caractérisé en ce que** la structure arrière du premier châssis partiel de véhicule (12) présente un dispositif de couplage (50) adapté pour soutenir des forces de basculement dans une direction transversale latérale par rapport au premier châssis partiel de véhicule et pour soutenir des forces de basculement dans une direction verticale, orthogonale par rapport à la direction transversale latérale, du premier châssis partiel de véhicule, qui est couplé ou peut être couplé, de préférence est couplé ou peut être couplé par complémentarité de forme, à un contre-dispositif de couplage (53), également adapté pour soutenir des forces de basculement dans ladite direction transversale latérale et dans ladite direction verticale, du second châssis partiel de véhicule (54).

11. Véhicule selon la revendication 10, **caractérisé en ce que** le dispositif de couplage présente un premier châssis de couplage (50), lequel est couplé ou peut être couplé, de préférence est couplé ou peut être couplé par complémentarité de forme, à un second châssis de couplage (53) du contre-dispositif de couplage, dans lequel les châssis de couplage sont réalisés de préférence sous la forme de châssis d'angle.

12. Véhicule selon la revendication 11, **caractérisé en ce que** l'unité de ressorts ou de ressorts et d'amortisseurs (22) et/ou la chaîne d'entraînement s'étendent au moins dans la première configuration à travers une zone intérieure, entourée par des sections de châssis de couplage du premier châssis de couplage (50), du châssis de couplage, et s'étendent, dans la deuxième configuration du véhicule, à travers une zone intérieure, entourée par des sections de châssis de couplage du second châssis de couplage (53), du second châssis de couplage (53), dans lequel le second châssis de couplage est réalisé avec un interstice de châssis de couplage, à travers lequel l'unité de ressorts ou de ressorts et d'amortisseurs (22) et/ou la chaîne d'entraînement peuvent être introduites dans le cadre du couplage du second châssis partiel de véhicule au premier châssis partiel de véhicule dans la zone intérieure du second châssis de couplage.

13. Véhicule selon la revendication 11 ou 12, **caractérisé en ce que** les châssis de couplage sont réalisés avec des trous d'ajustement (60 ; 62) et des boulons d'ajustement (64) venant en prise avec un trou d'ajustement respectif, reliés de manière solidaire à un châssis de couplage respectif et/ou avec des trous d'ajustement (60 ; 62) servant à recevoir des boulons d'ajustement traversant un trou d'ajustement respectif des deux châssis de couplage, séparés par rapport aux châssis de couplage, aux fins du couplage par complémentarité de forme et au centrage relatif des châssis de couplage (50, 53) au moyen des boulons d'ajustement et des trous d'ajustement.

14. Véhicule selon l'une quelconque des revendications 11 à 13, **caractérisé en ce que** les châssis de couplage sont réalisés avec des trous (60 ; 62) et des boulons de vissage venant en prise avec un trou respectif, reliés de manière solidaire à un châssis de couplage respectif et/ou avec des trous (60 ; 62) servant à recevoir des boulons de vissage traversant un trou respectif des deux châssis de couplage, séparés par rapport aux châssis de couplage, aux fins du couplage et de la liaison par complémentarité de forme des châssis de couplage (50 ; 53) au moyen des boulons de vissage et des écrous de vis associés.

15. Véhicule selon l'une quelconque des revendications 1 à 14, **caractérisé en ce que** le premier châssis partiel de véhicule et/ou le second châssis partiel de véhicule (54) sont équipés d'au moins un dispositif d'attelage de remorque (92a, 92b).
